# EUROPEAN PATENT SPECIFICATION

(11) **EP 2 381 178 B1**
(45) Date of publication and mention of the grant of the patent: **17.08.2016**
(21) Application number: 11161827.8
(22) Date of filing: 11.04.2011
(51) Int. Cl.: F24D 3/08, F24D 3/18, F24D 17/02, F24F 5/00, F24F 1/00

(54) **Heat pump type heating apparatus**
Erwärmungsvorrichtung in Form einer Wärmepumpe
Appareil de chauffage de type pompe à chaleur

(30) Priority: 22.04.2010 KR 20100037504
(43) Date of publication of application: 26.10.2011
(73) Proprietor: LG ELECTRONICS INC., Youngdungpo-gu Seoul 150-721 (KR)
(72) Inventor: Noh, Jinhee, 641-110, Changwon-si (KR); Park, Noma, 641-110, Changwon-si (KR); Park, Heewoong, 641-110, Changwon-si (KR); Choi, Hwanjong, 641-110, Changwon-si (KR)
(74) Representative: Vossius & Partner Patentanwälte Rechtsanwälte mbB

(56) References cited:
- EP-A2- 0 151 493
- WO-A2-2007/121540
- WO-A2-2010/035982

## Description

The present invention relates to a heat pump heating apparatus. More specifically, the present invention relates to a heat pump heating apparatus where a refrigerant compressed in a compressor can be used selectively for at least one of hot water supply and air conditioning.

In general, a heat pump is a cooling and heating apparatus which transfers a heat source at low temperature to high temperature or a heat source at high temperature to low temperature by using heating or condensing of a refrigerant.

A heat pump comprises a compressor, an outdoor heat exchanger, an expansion apparatus, and an indoor heat exchanger; recently, heat pump type speed heating apparatus are being developed, where hot water supply makes use of heating water by employing a refrigerant compressed in a compressor to minimize consumption of fossil fuel.

JP 2001-263857A (2001.9.26) describes a cooling/heating and hot water supply apparatus and a method for controlling the same, where a refrigerant discharged from a compressor passes a heat exchanger for hot water supply, an outdoor heat exchanger, an expansion apparatus, and a heat exchanger for air conditioning sequentially and is recovered by the compressor; or the refrigerant discharged from the compressor is recovered by the compressor after passing the heat exchanger for air conditioning, the expansion apparatus, and the outdoor heat exchanger sequentially.

WO 2007/121540 (A2) relates to heat pump systems including auxiliary liquid heating, according to the preamble of claim 1, EP 0 151 493 (A2) relates to a room-warming/cooling and hot-water supplying heat-pump apparatus performing both operations of room-warming and cooling and water heating.

In a cooling/heating and hot water supply apparatus and a control method for the same according to the art, however, as a refrigerant which has passed a hot water supply heat exchanger is condensed, expanded, and evaporated as the refrigerant passes all of an outdoor heat exchanger, an expansion apparatus, and an outdoor heat exchanger, hot water supply performance can be degraded.

To solve the above problem, the present invention provides a heat pump type heating apparatus with high efficiency, as defined in claim 1.

A heat pump type heating apparatus according to the present invention comprises a cooling cycle circuit capable of operating air conditioning, including a compressor, an outdoor heat exchanger, an expansion apparatus, and an indoor heat exchanger; a hot water supply heat exchanger connected to the cooling cycle circuit through a hot water supply flow path for a refrigerant discharged from the compressor to be condensed, expanded, and evaporated in the cooling cycle circuit after being used for hot water supply; a refrigerant controller which controls flow direction of the refrigerant discharged from the compressor for the refrigerant discharged from the compressor to pass through or bypass the hot water supply heat exchanger; and a heat exchanger bypass flow path connected to guide the refrigerant which has passed the hot water heat exchanger between the outdoor heat exchanger and the indoor heat exchanger to bypass either of the outdoor heat exchanger and the indoor heat exchanger.

The heat pump type heating apparatus further comprise a water refrigerant heat exchanger connected to the hot water supply flow path through a water refrigerant heat exchanger connecting flow path for the refrigerant which has passed the hot water supply heat exchanger to flow into the hot water supply flow path after heating water,
a floor heating pipe connected to the water refrigerant heat exchanger through a heating water pipe and a floor heating pump installed in the heating water pipe and
a water refrigerant heat exchanger refrigerant controller which controls the flow direction of a refrigerant so that the refrigerant which has passed the hot water supply heat exchanger passes through or bypasses the water refrigerant heat exchanger.

The refrigerant controller can be controlled so that a refrigerant flows into the hot water supply heat exchanger at the time of hot water supply operation or simultaneous operation of hot water supply and air conditioning.

The refrigerant controller can be controlled so that a refrigerant bypasses the hot water supply heat exchanger at the time of air conditioning operation.

The heat pump type heating apparatus can further comprise an auxiliary refrigerant controller which controls the flow direction of the refrigerant which has passed the hot water supply heat exchanger so that the refrigerant which has passed the hot water supply heat exchanger can either pass through or bypass the heat exchanger bypass flow path.

The auxiliary refrigerant controller can be controlled so that the refrigerant flows through the heat exchanger bypass flow path at the time of hot water supply operation.

If defrosting conditions are met during the hot water supply operation, the auxiliary refrigerant controller can be controlled in such a way that the refrigerant bypasses the heat exchanger bypass flow path; and the cooling cycle circuit can be switched from heating operation to cooling operation.

The auxiliary refrigerant controller can be controlled in such a way that the refrigerant bypasses the heat exchanger bypass flow path when hot water supply and air conditioning are operated at the same time.

The expansion apparatus can comprise an indoor expansion apparatus and an outdoor expansion apparatus; and one end of the heat exchanger bypass flow path can be connected to the hot water supply flow path and the other end thereof can be connected between the indoor expansion apparatus and the outdoor expansion apparatus.

The heat pump type heating apparatus can further comprise a heat exchanger bypass valve which is installed in the heat exchanger bypass flow path and controls the flow of a refrigerant.

The heat pump type heating apparatus can further comprise a liquid refrigerant valve which is installed between the heat exchanger bypass flow path and the indoor expansion apparatus and controls the flow of a refrigerant.

The heat pump type heating apparatus can further comprise a case where the water refrigerant heat exchanger is installed and an indoor fan which is installed inside the case and circulates indoor air to the water refrigerant heat exchanger.

The water refrigerant heat exchanger refrigerant controller can be controlled so that a refrigerant flows into a water refrigerant heat exchanger at the time of floor heating operation, simultaneous operation of floor heating and hot water supply, and simultaneous operation of floor heating, hot water supply, and air conditioning.

The refrigerant controller can be controlled so that a refrigerant flows into the hot water supply heat exchanger at the time of floor heating operation.

The expansion apparatus can comprise an indoor expansion apparatus and an outdoor expansion apparatus; the heat pump type speed heating apparatus can further comprise a gas-liquid separator installed between the indoor expansion apparatus and the outdoor expansion apparatus and an injection line which injects vaporized refrigerant of the gas-liquid separator to the compressor.

The gas-liquid separator can be installed between the heat exchanger bypass flow path and the outdoor expansion apparatus.

The heat pump type heating apparatus can further comprise an injection refrigerant controller which can be installed in the injection line to control vaporized refrigerant injected to the compressor; and can be closed at the time of starting operation and opened after stabilization.

The cooling cycle circuit can further comprise a cooling/heating switching valve which switches between cooling operation and heating operation; the hot water supply flow path can comprise a hot water supply inflow flow path leading the refrigerant which has been compressed in the compressor to the hot water supply heat exchanger and a hot water outflow flow path leading the refrigerant which has flowed out from the hot water supply heat exchanger to the cooling/heating switching valve; the hot water supply inflow flow path and the hot water supply outflow flow path can be connected to the compressor and the cooling/heating switching valve respectively; and the heat exchanger bypass flow path can be connected to the hot water supply outflow flow path.

The accompanying drawings, which are included to provide further understanding of this document and are incorporated to constitute a part of this specification, illustrate embodiments of this document and together with the description serve to explain the principles of this document.

In the drawings:
FIG. 1 is a simplified view of one embodiment of a heat pump type heating apparatus according to the present invention;
FIG. 2 is a block diagram of one embodiment of a heat pump type heating apparatus according to the present invention;
FIG. 3 is a block diagram illustrating the flow of a refrigerant when one embodiment of the heat pump type heating apparatus shown in FIG. 2 corresponds to space cooling operation;
FIG. 4 is a block diagram illustrating the flow of a refrigerant when one embodiment of the heat pump type heating apparatus shown in FIG. 2 performs space cooling operation and hot water supply operation;
FIG. 5 is a block diagram illustrating the flow of a refrigerant when one embodiment of the heat pump type heating apparatus shown in FIG. 2 performs space heating operation;
FIG. 6 is a block diagram illustrating the flow of a refrigerant when one embodiment of the heat pump type heating apparatus shown in FIG. 2 performs both space heating operation and hot water supply operation;
FIG. 7 is a block diagram illustrating the flow of a refrigerant when one embodiment of the heat pump type heating apparatus shown in FIG. 2 performs floor heating operation;
FIG. 8 is a block diagram illustrating the flow of a refrigerant when one embodiment of the heat pump type heating apparatus shown in FIG. 2 performs both floor heating and hot water supply operation;
FIG. 9 is a block diagram illustrating the flow of a refrigerant when one embodiment of a heat pump type heating apparatus shown in FIG. 2 performs hot water supply operation;
FIG. 10 is a block diagram illustrating the flow of a refrigerant when one embodiment of the heat pump type heating apparatus shown in FIG. 9 performs defrosting operation in the middle of hot water supply operation;
FIG. 11 is a block diagram illustrating the flow of a refrigerant when one embodiment of the heat pump type heating apparatus shown in FIG. 2 performs space heating, floor heating, and hot water supply operation; and
FIG. 12 is a block diagram of another embodiment of a heat pump type heating apparatus according to the present invention.

*** Description of Key Elements In Drawings ***

| | |
|---|---|
| 2: cooling cycle circuit | 4: hot water supply heat exchanger |
| 6: refrigerant controller | 8: heat exchanger bypass flow path |
| 10: auxiliary refrigerant controller | 12: compressor |
| 14: outdoor heat exchanger | 16: outdoor expansion apparatus |
| 17: indoor expansion apparatus | 18: indoor heat exchanger |
| 40: cooling/heating switching valve | 50: hot water supply flow path |
| 52: hot water supply inflow flow path | 54: hot water supply outflow flow path |
| 60: hot water pump | 72: water refrigerant heat exchanger |
| 74: heating inflow flow path | 76: heating outflow flow path |
| 84: floor heating pump | |
| 86: water refrigerant heat exchanger refrigerant controller | |
| 88: heat exchanger | 90: liquid refrigerant valve |

In the following, embodiments of the present invention in which the objective above can be realized in specific forms will be described with reference to appended drawings. For the description of the present embodiments, the same names and symbols are used for the same structure and additional description according thereto is not provided below.

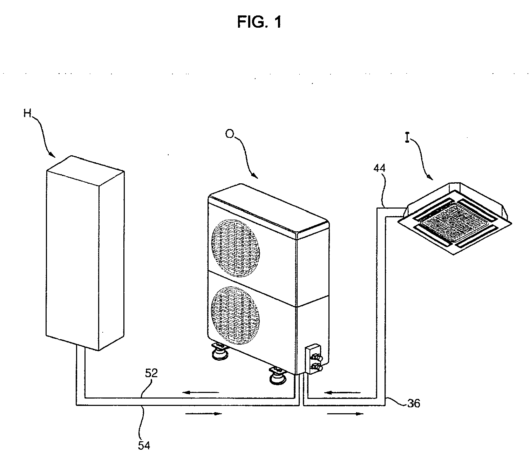

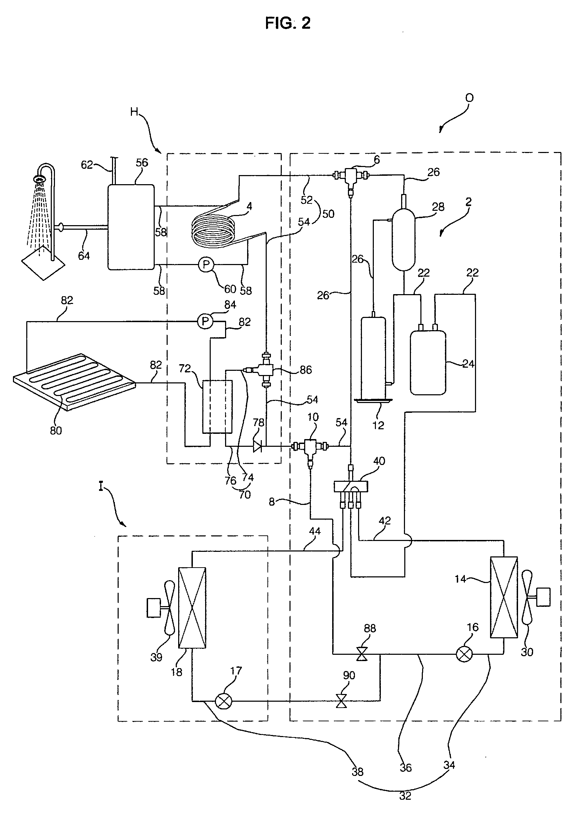

FIG. 1 is a simplified view of one embodiment of a heat pump type heating apparatus according to the present invention; FIG. 2 is a block diagram of one embodiment of a heat pump type speed heating apparatus according to the present invention.

The heat pump type heating apparatus comprises a cooling cycle circuit 2, a hot water supply heat exchanger 4, a refrigerant controller 6, a heat exchanger bypass flow path 8, and an auxiliary refrigerant controller 10.

The cooling cycle circuit 2 includes a compressor 12, an outdoor heat exchanger 14, an expansion apparatus 16, 17, and an indoor heat exchanger 18; and can perform air conditioning operation.

The cooling cycle circuit 2 can perform indoor cooling and air conditioning or indoor heating and air conditioning; air conditioning operation of the cooling cycle circuit 2 can include a space heating operation which performs heating and air conditioning by inhaling indoor air and a space cooling operation which performs cooling and air conditioning by inhaling indoor air.

A cooling cycle circuit 2 can be equipped with an accumulator 24 in an inflow flow path 22 of the compressor 12, which prevents a liquid refrigerant from flowing into the compressor 12; an oil separator 28 can be installed in a discharge flow path 26 of the compressor 12, which separates oil from a mixture of the refrigerant and oil discharged from the compressor 12 and recovers the oil to the compressor 12.

The outdoor heat exchanger 14 condenses or evaporates the refrigerant; the outdoor heat exchanger 14 can be realized in the form of an air refrigerant heat exchanger where outdoor air exchanges heat with the refrigerant or in the form of a water refrigerant heat exchanger where cooling water exchanges heat with the refrigerant.

The outdoor heat exchanger 14, if realized in the form of an air refrigerant heat exchanger, can be equipped with an outdoor fan 30 which ventilates outdoor air to the outdoor heat exchanger 14.

The outdoor heat exchanger 14 can be connected to the indoor heat exchanger 18 through a heat exchanger connecting pipe 32.

The expansion apparatus 16, 17 can be installed in the heat exchanger connecting pipe 32.

The expansion apparatus 16, 17 can include an outdoor expansion apparatus 16 installed close to the outdoor heat exchanger 14 between the outdoor heat exchanger 14 and the indoor heat exchanger 18; and an indoor expansion apparatus 17 installed close to the indoor heat exchanger 18 between the outdoor heat exchanger 14 and the indoor heat exchanger 18.

The heat exchanger connecting pipe 32 can include an outdoor heat exchanger-outdoor expansion apparatus connecting pipe 34 which connects the outdoor heat exchanger 14 and the outdoor expansion apparatus 16; an expansion apparatus connecting pipe 36 which connects the outdoor expansion apparatus 16 and the indoor expansion apparatus 17; and an indoor expansion apparatus-indoor heat exchanger connecting pipe 38 which connects the indoor expansion apparatus 17 and the indoor heat exchanger 18.

The indoor heat exchanger 18 performs cooling or heating an indoor space as indoor air exchanges heat with the refrigerant; an indoor fan 39 can be installed to circulate the indoor air to the indoor heat exchanger 18.

The cooling cycle circuit 2 can be realized in the form of a cooling air conditioner where the indoor heat exchanger 18 cools down indoor air as the cooling cycle circuit 2 is so connected that the refrigerant compressed in the compressor 12 passes the outdoor heat exchanger 14, the expansion apparatus 16, 17, and the indoor heat exchanger 18 sequentially and is recovered by the compressor 12.

The cooling cycle circuit 2 can be realized in the form of a heating air conditioner where the indoor heat exchanger heats up indoor air as the cooling cycle circuit 2 is so connected that the refrigerant compressed in the compressor 12 passes the outdoor heat exchanger 14, the expansion apparatus 16, 17, and the indoor heat exchanger 18 sequentially and is recovered by the compressor 12.

The cooling cycle circuit 2 can be realized in the form of an air conditioner for both cooling and heating, where the refrigerant compressed in the compressor 12 passes the outdoor heat exchanger 14, the expansion apparatus 16, 17, and the indoor heat exchanger 18 sequentially and is recovered by the compressor 12; and the refrigerant compressed in the compressor 12, at the time of heating operation, passes the indoor heat exchanger 18, the expansion apparatus 16, 17, and the outdoor heat exchanger 18 sequentially and is recovered by the compressor 12.

It is preferred that the cooling cycle circuit 2 is installed for the indoor heat exchanger 18 to cool down or heat up an indoor space. In what follows, it is assumed that the cooling cycle circuit 2 is composed of an air conditioner for both cooling and heating which can switch between cooling and heating operation.

The cooling cycle circuit 2 can further comprise a cooling/heating switching valve 40 which circulates the refrigerant in the order of the compressor 12, the outdoor heat exchanger 14, the expansion apparatus 16, 17, and the indoor heat exchanger 18 or in the order of the compressor 12, the indoor heat exchanger 18, the expansion apparatus 16, 17, and the outdoor heat exchanger 14.

The cooling/heating switching valve 40 can be connected to the compressor 12 through a compressor inflow flow path 22 and a compressor discharge flow path 26; to the outdoor heat exchanger 14 through an outdoor heat exchanger connecting pipe 42; and to the indoor heat exchanger 18 through an indoor heat exchanger connecting pipe 44.

The hot water supply heat exchanger 4 is connected to the cooling cycle circuit 2 through the hot water supply flow path 50 in such a way that the refrigerant discharged from the compressor 12 is used for hot water supply and then condensed, expanded, and evaporated in the cooling cycle circuit 2.

The hot water supply flow path 50 can comprise a hot water supply inflow flow path 52 which is connected for the refrigerant of the cooling cycle circuit 2, particularly the refrigerant compressed at the compressor 12 to flow into the hot water supply heat exchanger 4 and a hot water supply outflow flow path 54 which is connected for the refrigerant flowed out from the hot water supply heat exchanger 4 to the cooling cycle circuit 2, particularly the cooling/heating switching valve 40.

The hot water supply inflow flow path 52 and the hot water supply outflow flow path 54 can be connected to the compressor 12 and the cooling/heating switching valve 40 respectively.

One end of the hot water supply inflow flow path 52 can be connected to the compressor discharge flow path 26 and the other end thereof can be connected to the hot water supply heat exchanger 4.

One end of the hot water supply outflow flow path 54 can be connected to the hot water supply heat exchanger 4 and the other end thereof can be connected to the compressor discharge flow path 26.

The hot water supply heat exchanger 4, if the refrigerant controller 6 controls the refrigerant to flow into the hot water supply heat exchanger 4, corresponds to a desuperheater which condenses the refrigerant overheated at the compressor 12 by making the refrigerant exchange heat with water used for hot water supply.

The hot water supply heat exchanger 4 can have a refrigerant flow path through which the refrigerant overheated at the compressor 12 passes and a water flow path through which the water used for hot water supply passes.

The hot water supply heat exchanger 4 can be formed as a double pipe heat exchanger formed in such a way that the refrigerant flow path and the water flow path are disposed to have a heat transfer member between them; or as a sheet type heat exchanger formed in such a way that the refrigerant and the water flow path disposed in an alternate fashion to have the heat transfer member between them.

The hot water supply exchanger 4 can be connected to the hot water supply tank 56 and a hot water pipe 58; a hot water pump 60 can be installed in the hot water pipe 58.

A water supply unit 62 through which external water is supplied to the hot water supply tank 56 and a water outflow unit 64 through which the water of the hot water supply tank 56 flows out can be connected to the hot water supply tank 56.

The hot water supply tank 56 can be so constructed that the water which has flowed into the hot water supply tank 56 after being heated flows out directly through the water outflow unit 64.

A hot water supply coil connected to a hot water pipe 58 is installed inside the hot water supply tank 56; water heated in the hot water supply heat exchanger 4 heats the inside of the hot water supply tank 56 while passing through the hot water supply coil; water flowing into the water supply unit 62 can be heated by the hot water supply coil and flow out to the water outflow unit 64.

In the heat pump type heating apparatus, the refrigerant which has heated the hot water supply heat exchanger 4 can immediately flow into the cooling cycle circuit 2; also, the refrigerant which has heated the hot water supply heat exchanger 4 can flow into the cooling cycle circuit 2 after being used for indoor floor heating or air conditioned heating.

The heat pump type heating apparatus can further comprise a water refrigerant heat exchanger 72 connected to the hot water supply flow path 50 and the water refrigerant heat exchanger connecting flow path 70.

The water refrigerant heat exchanger connecting flow path 70 can include a heating inflow flow path 74 where the refrigerant of the hot water supply outflow flow path 54 flows into the water refrigerant heat exchanger 72 and a heating outflow flow path 76 where the refrigerant which has passed the water refrigerant heat exchanger 72 flows out through the hot water outflow flow path 54.

In the heating outflow flow path 76, a check valve 78 which prevents the refrigerant of the hot water supply outflow flow path 54 from passing through the heating outflow flow path 76 and flowing backward to the water refrigerant heat exchanger 72 can be installed.

The water refrigerant heat exchanger 72 is a condensation heat exchanger where the refrigerant condensed for the first time in the hot water supply heat exchanger 58 is additionally condensed while exchanging heat with water.

The water refrigerant heat exchanger 72 can have a refrigerant flow path through which the refrigerant which has passed the hot water supply heat exchanger 4 passes and a water flow path through which water used for floor heating or indoor air conditioning passes.

The water refrigerant heat exchanger 72 can be formed as a double pipe heat exchanger formed in such a way that the refrigerant flow path and the water flow path are disposed to have a heat transfer member between them; or as a sheet type heat exchanger formed in such a way that the refrigerant and the water flow path disposed in an alternate fashion to have the heat transfer member between them.

The water refrigerant heat exchanger 72 can be connected to a floor heating pipe 80 installed in an indoor floor through a heating water pipe 82; if a floor heating pump 84 is installed in the heating water pipe 82, heat of the refrigerant which has passed the hot water supply heat exchanger 4 can be additionally used for indoor floor heating.

The water refrigerant heat exchanger 72 can be installed inside a case and if an indoor fan which circulates indoor air inside the case into the water refrigerant heat exchanger 72 is installed, the water refrigerant heat exchanger 72, the case, and the indoor fan can be composed of a fan coil unit which performs circulated heating against indoor air to the water refrigerant heat exchanger 72; the heat of the refrigerant which has passed the hot water supply heat exchanger 4 can be additionally used for air conditioned heating of an indoor space.

In what follows, for the convenience of description, it is assumed that the floor heating pipe 80 is connected to the water refrigerant heat exchanger 72 through the heating water pipe 82 and the floor heating pump 84 is installed in the heating water pipe 82.

The heat pump type heating apparatus can include a water refrigerant heat exchanger refrigerant controller 86 which controls the flow of the refrigerant which has passed the hot water supply heat exchanger 4 to pass or bypass the water refrigerant heat exchanger 72.

It is possible for the water refrigerant heat exchanger 72 to be directly connected to the hot water supply outflow flow path 54 for the refrigerant which has passed the hot water supply heat exchanger 4 to be always used for floor heating; however, it is preferred that the water refrigerant heat exchanger 72 should be installed in such a way for the user to selectively operate the floor heating.

The water refrigerant heat exchanger refrigerant controller 86 can be composed of a floor heating valve which allows the refrigerant to pass through the water refrigerant heat exchanger 72 when the user selects floor heating.

The water refrigerant heat exchanger refrigerant controller 86, if the operation of the heat pump type heating apparatus includes floor heating operation, can control flow direction of the refrigerant for the refrigerant to flow into the water refrigerant heat exchanger 72; on the other hand, if the operation of the heat pump type speed heating apparatus does not include floor heating operation, the water refrigerant heat exchanger refrigerant controller 86 can control the flow of the refrigerant for the refrigerant to bypass the water refrigerant heat exchanger 72.

The water refrigerant heat exchanger refrigerant controller 86 can control the refrigerant to flow into the water refrigerant heat exchanger 72 at the time of floor heating operation, at the time of simultaneous operation of floor heating and hot water supply, and at the time of simultaneous operation of floor heating, hot water supply, and air conditioning.

The water refrigerant heat exchanger refrigerant controller 86 can include a three-way valve installed at the hot water supply flow path 60, particularly at the hot water supply outflow flow path 54 to select outflow direction of the refrigerant.

If the water refrigerant heat exchanger refrigerant controller 86 is a three-way valve, an inlet port and a first outlet port thereof can be connected to the hot water supply outflow flow path 54 and a second outlet port thereof can be connected to the floor heating inflow flow path 74.

The water refrigerant heat exchanger refrigerant controller 86 can include a first valve which is installed in the heating inflow flow path 74 and is opened at the time of floor heating operation and closed when floor heating operation is not performed; and a second valve which is installed in the hot water outflow flow path 54 and is closed at the time of floor heating operation and opened when floor heating operation is not performed.

The refrigerant controller 6 can control the flow direction of the refrigerant discharged from the compressor 12 for the discharged refrigerant to pass through or bypass the hot water supply heat exchanger 4.

The refrigerant controller 6, if the operation of the heat pump type speed heating apparatus includes at least one of hot water supply operation and floor heating operation, controls the refrigerant compressed at the compressor 12 to flow into the hot water supply heat exchanger 4; on the other hand, if the operation of the heat pump type speed heating apparatus include neither the hot water supply operation nor the floor heating operation, the refrigerant controller 90 can control the refrigerant compressed at the compressor 12 to bypass the hot water supply heat exchanger 4.

The refrigerant controller 6, at the time of hot water supply operation, can control the refrigerant to flow into the hot water supply heat exchanger 4.

The refrigerant controller 6, at the time of simultaneous operation of hot water supply and air conditioning, can control the first refrigerant to flow into the hot water supply heat exchanger 4.

The refrigerant controller 6, at the time of simultaneous operation of hot water supply and floor heating, can control the first refrigerant to flow into the hot water supply heat exchanger 4.

The refrigerant controller 6, at the time of simultaneous operation of hot water supply, floor heating, and air conditioning, can control the first refrigerant to flow into the hot water supply heat exchanger 4.

The refrigerant controller 6, at the time of air conditioning operation, can control the refrigerant to bypass the hot water supply heat exchanger 4. In other words, the refrigerant controller 6 can control the refrigerant to bypass the hot water supply heat exchanger 4 at the time of space cooling operation and can control the refrigerant to bypass the hot water supply heat exchanger 4 at the time of space heating operation.

The refrigerant controller 6 can be composed of a three-way valve which is installed in the cooling cycle circuit 2 and can select the outflow direction of the refrigerant.

If the refrigerant controller 6 is a three-way valve, an inlet port and a first outlet port thereof can be connected to a compressor outflow flow path 26 and a second outlet port can be connected to the hot water supply inflow flow path 52.

The heat exchanger bypass flow path 8 can be connected to guide the refrigerant which has passed the hot water supply heat exchanger 4 between the outdoor heat exchanger 14 and the indoor heat exchanger 18 for the refrigerant which has passed the hot water heat exchanger 4 to bypass either of the outdoor heat exchanger 14 and the indoor heat exchanger 18.

One end of the heat exchanger bypass flow path 8 can be connected to the hot water supply flow path 50 and the other end thereof can be connected between an indoor expansion apparatus 17 and an outdoor expansion apparatus 16.

The heat exchanger bypass flow path 8 can guide the refrigerant of the hot water outflow flow path 54 between the indoor expansion apparatus 17 and the outdoor expansion apparatus 16 as one end of the heat exchanger bypass flow path 8 is connected to the hot water outflow flow path 54 of the hot water flow path 50 and the other end thereof to an expansion apparatus connecting pipe 36.

The refrigerant guided to the heat exchanger bypass flow path 8 is expanded in the indoor expansion apparatus 17 and can be recovered by the compressor 12 after being evaporated; or the refrigerant is expanded in the outdoor expansion apparatus 16 and can be recovered by the compressor 12 after being evaporated at the outdoor heat exchanger 14.

In other words, if the refrigerant is guided between the indoor expansion apparatus 17 and the outdoor expansion apparatus 16 through the heat exchanger bypass flow path 8, a condensation process is not generated but only an expansion and an evaporation process are generated in the cooling cycle circuit 2; the amount of heat transferred of the hot water supply heat exchanger 4 and the water refrigerant heat exchanger 72 is increased; and efficiency of hot water supply and floor heating is enhanced.

The auxiliary refrigerant controller 10 can control the flow direction of the refrigerant which has passed the hot water supply heat exchanger 4 for the refrigerant which has passed the hot water supply heat exchanger 4 to pass through or bypass the heat exchanger bypass flow path 8.

The auxiliary refrigerant controller 10, if the operation of the heat pump type speed heating apparatus includes both hot water supply and air conditioning, can control the refrigerant which has passed the hot water supply heat exchanger 4 to bypass the heat exchanger bypass flow path 8.

The auxiliary refrigerant controller 10 can control the refrigerant which has passed the hot water supply heat exchanger 4 to bypass the heat exchanger bypass flow path 8 at the time of simultaneous operation of hot water supply and air conditioning.

The auxiliary refrigerant controller 10 can control the refrigerant which has passed the hot water supply heat exchanger 4 to bypass the heat exchanger bypass flow path 8 at the time of simultaneous operation of hot water supply, floor heating, and air conditioning.

The auxiliary refrigerant controller 10 can control the refrigerant which has passed the hot water supply heat exchanger 4 to bypass the heat exchanger bypass flow path 8 at the time of operation of air conditioning.

The auxiliary refrigerant controller 10 can control the refrigerant which has passed the hot water supply heat exchanger 4 to bypass the heat exchanger bypass flow path 8 at the time of operation of hot water supply.

The auxiliary refrigerant controller 10 can control the refrigerant which has passed the hot water supply heat exchanger 4 to bypass the heat exchanger bypass flow path 8 at the time of simultaneous operation of hot water supply and floor heating.

The auxiliary refrigerant controller 10 can control the refrigerant which has passed the hot water supply heat exchanger 4 to bypass the heat exchanger bypass flow path 8 at the time of operation of floor heating.

The auxiliary refrigerant controller 10, if defrosting conditions are met during the hot water supply operation, controls the refrigerant which has passed the hot water supply heat exchanger 4 to bypass the heat exchanger bypass flow path 8 and at this time, the cooling cycle circuit 2 is switched from heating operation to cooling operation for defrost of an outdoor heat exchanger 14 and the outdoor heat exchanger 14 is defrosted. Defrosting of the outdoor heat exchanger 14 is described in detail below.

The auxiliary refrigerant controller 10 can be composed of a three-way valve installed at the hot water supply outflow flow path 54 to select outflow direction of the refrigerant.

If the auxiliary refrigerant controller 10 is a three-way valve, an inlet port and a first outlet port thereof can be connected to the hot water supply outflow flow path 54 and a second outlet port thereof can be connected to the heat exchanger bypass flow path 8.

The auxiliary refrigerant controller 10 can include a first valve which is installed between the auxiliary refrigerant controller 10 and the cooling/heating switching valve 40 in the hot water supply outflow flow path 54, opened when hot water supply operation and air conditioning operation are performed or when floor heating operation and air conditioning operation are performed, and closed when at least one of floor heating operation and hot water supply operation are performed but air conditioning operation is not performed; and a second valve which is installed in the heat exchanger bypass flow path 8, closed when hot water supply operation and air conditioning operation are performed or floor heating operation and air conditioning operation are performed, and opened when at least one of floor heating operation and hot water supply operation are performed but air conditioning operation is not performed.

The heat pump type heating apparatus can further comprise a heat exchanger bypass valve 88 being installed in the heat exchanger bypass flow path 8 and controlling the flow of the refrigerant and a liquid refrigerant valve 90 being installed between the heat exchanger bypass flow path 8 and the indoor expansion apparatus 17 and controlling the flow of the refrigerant.

The heat exchanger bypass valve 88 can be opened in the case of simultaneous operation of hot water supply and floor heating, floor heating operation, or hot water supply operation; the heat exchanger bypass valve 96 can be closed in the case of air conditioning operation, simultaneous operation of air conditioning and hot water supply, or simultaneous operation of air conditioning, hot water supply, and floor heating.

The liquid refrigerant valve 90 can be opened in the case of air conditioning operation, simultaneous operation of air conditioning and hot water supply, or simultaneous operation of air conditioning, hot water supply, and floor heating; the liquid refrigerant valve 98 can be closed in the case of simultaneous operation of hot water supply and floor heating, floor heating operation, or hot water supply operation.

The cooling cycle circuit 2 can constitute a separation type air conditioner comprising an outdoor unit O and an indoor unit I; and a hot water supply unit H can be connected to the outdoor unit O.

The compressor 12, the cooling/heating switching valve 30, the outdoor heat exchanger 14, the outdoor expansion apparatus 16, and the outdoor fan 30 can be installed in the outdoor unit O.

The indoor expansion apparatus 17 and the indoor heat exchanger 18 and the indoor fan 39 can be installed in the indoor unit I.

The hot water supply heat exchanger 4, the hot water pump 60, the water refrigerant heat exchanger 72, the floor heating pump 84, and the water refrigerant heat exchanger refrigerant controller 86 can be installed in the hot water supply unit H.

The refrigerant controller 6, the heat exchanger bypass flow path 8, the auxiliary refrigerant controller 10, the heat exchanger bypass valve 88, and the liquid refrigerant valve 90 can be installed in the outdoor unit O.

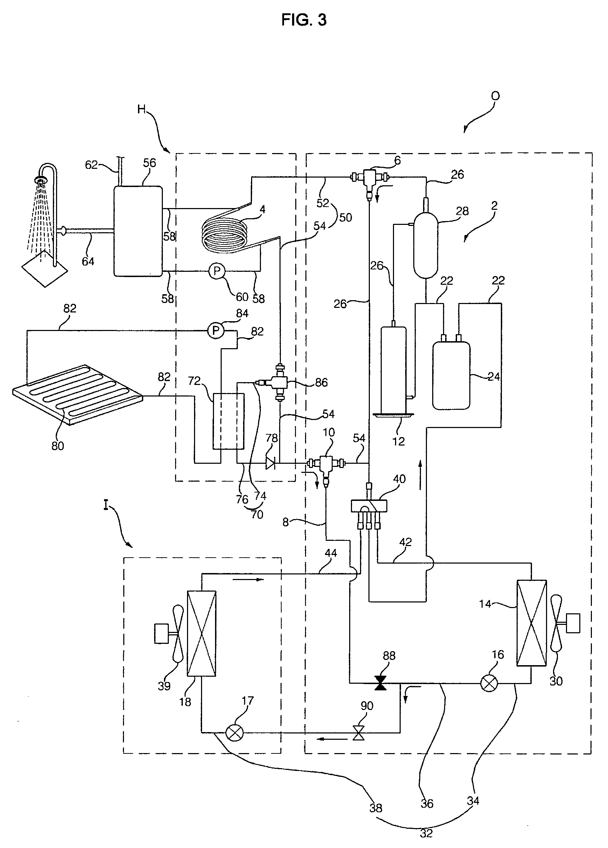

FIG. 3 is a block diagram illustrating the flow of a refrigerant when one embodiment of the heat pump type speed heating apparatus shown in FIG. 2 corresponds to space cooling operation.

The heat pump type speed heating apparatus, in the case of space cooling operation during air conditioning, is operated as follows. The compressor 12 is operated; the refrigerant controller 6 is controlled for the refrigerant to flow into the cooling/heating switching valve 40 while bypassing the hot water supply heat exchanger 4, the water refrigerant heat exchanger 72, and the auxiliary refrigerant controller 10; the auxiliary refrigerant controller 10 is controlled for the refrigerant of the hot water supply outflow flow path 54 to flow into the heat exchanger bypass flow path 8; the outdoor fan 30 and the indoor fan 39 are rotated; the cooling/heating switching valve 40 is operated in a cooling mode; the heat exchanger bypass valve 88 is closed; the liquid refrigerant valve 90 is opened; and the hot water pump 60 and the floor heating pump 84 are not operated.

The refrigerant compressed at the compressor 12 at the time of operating the compressor 12 passes through the refrigerant controller 6 and flows into the cooling/heating switching valve 40 by bypassing the hot water supply heat exchanger 4 and the water refrigerant heat exchanger 72; afterwards, the refrigerant is condensed at the outdoor heat exchanger 14 by exchanging heat with outdoor air. The refrigerant condensed at the outdoor heat exchanger 14 is expanded by at least one of the outdoor expansion apparatus 16 and the indoor expansion apparatus 17 and is evaporated at the indoor heat exchanger 18. The refrigerant evaporated at the indoor heat exchanger 18 is recovered by the compressor 12 after passing through the cooling/heating switching valve 40.

In other words, the refrigerant discharged from the compressor 12 is recovered by the compressor 12 after passing through the cooling/heating switching valve 40, the outdoor heat exchanger 14, the outdoor expansion apparatus 17, the indoor heat exchanger 18, and the cooling/heating switching valve 40 sequentially.

The outdoor heat exchanger 14 of the heat pump type speed heating apparatus condenses the refrigerant; the indoor heat exchanger 18 evaporates the refrigerant; and the indoor air is cooled down by exchanging heat with the indoor heat exchanger 18.

The heat pump type speed heating apparatus uses the refrigerant to cool down indoor air at the time of space cooling operation.

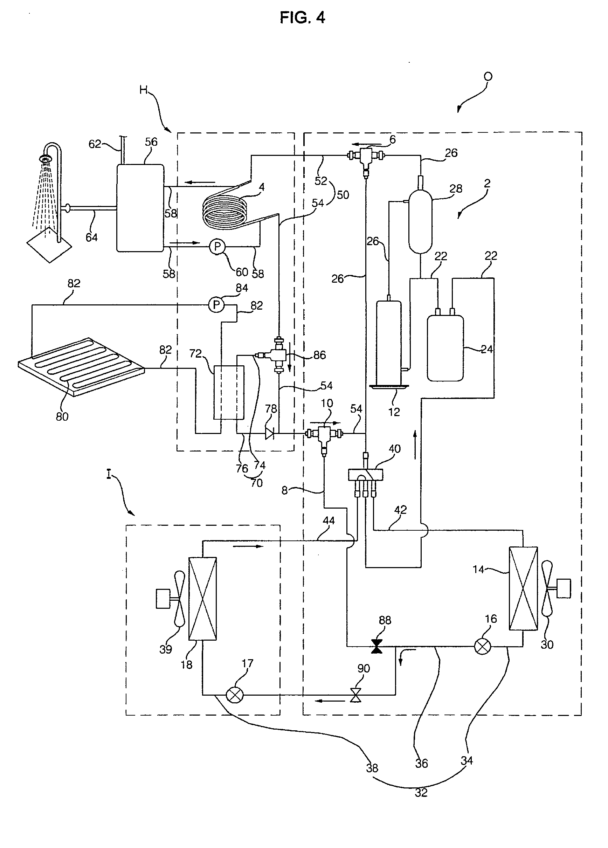

FIG. 4 is a block diagram illustrating the flow of a refrigerant when one embodiment of the heat pump type speed heating apparatus shown in FIG. 2 performs space cooling operation and hot water supply operation.

The heat pump type heating apparatus, in the case of simultaneous operation of space cooling and hot water supply, is operated as follows. The compressor 12 is operated; the refrigerant controller 6 is controlled for the refrigerant to flow into the hot water supply heat exchanger 4; the water refrigerant heat exchanger refrigerant controller 86 is controlled for the refrigerant of the hot water supply outflow flow path 54 to bypass the water refrigerant heat exchanger 72; the auxiliary refrigerant controller 10 is controlled for the refrigerant of the hot water supply outflow flow path 54 to bypass the heat exchanger bypass flow path 8; the outdoor fan 30 and the indoor fan 39 is rotated; the cooling/heating switching valve 40 is operated in a cooling mode; the heat exchanger bypass valve 88 is closed; the liquid refrigerant valve 90 is opened; the hot water pump 60 are operated; and the floor heating pump 84 is not operated.

At the time of operating the hot water pump 60, the water of the hot water supply tank 56 flows into the hot water supply heat exchanger 4 through the hot water pipe 58 and passes through the hot water supply heat exchanger 4, and then circulates to the hot water supply tank 56.

At the time of operation of the compressor 12, the refrigerant compressed at the compressor passes through the refrigerant controller 6 and the hot water supply inflow flow path 52 and flows into the hot water supply heat exchanger 4; the refrigerant heated at the compressor 12 is condensed by exchanging heat with water while the refrigerant passes through the hot water supply heat exchanger 4.

The refrigerant condensed at the hot water supply heat exchanger 4 bypasses the water refrigerant heat exchanger 72 while passing through the hot water supply outflow flow path 54 and passes through the auxiliary refrigerant controller 10 and flows into the cooling/heating switching valve 40. Afterwards, the refrigerant is condensed again at the outdoor heat exchanger 14 by exchanging heat with outdoor air. The refrigerant condensed at the outdoor heat exchanger 14 is expanded in at least one of the outdoor expansion apparatus 16 and the indoor expansion apparatus 17; and evaporated at the indoor heat exchanger 18. The refrigerant is recovered by the compressor 12 as the refrigerant evaporated at the indoor heat exchanger 18 passes through the cooling/heating switching valve 40.

In other words, the refrigerant discharged from the compressor 12 is recovered by the compressor 12 after passing through the hot water supply heat exchanger 4, the cooling/heating switching valve 40, the outdoor heat exchanger 14, the outdoor expansion apparatus 16, the indoor expansion apparatus 17, the indoor heat exchanger 18, and the cooling/heating switching valve 40 sequentially.

The hot water supply heat exchanger 4 and the outdoor heat exchanger 14 of the heat pump type speed heating apparatus condenses the refrigerant; the indoor heat exchanger 18 evaporates the refrigerant; indoor air is cooled down by exchanging heat with the indoor heat exchanger 18; and the hot water supply heat exchanger 4 heats the water of the hot water supply tank 56.

In the heat pump type heating apparatus, at the time of simultaneous operation of space cooling and hot water supply, the refrigerant is used to cool down indoor air after being used for heating water.

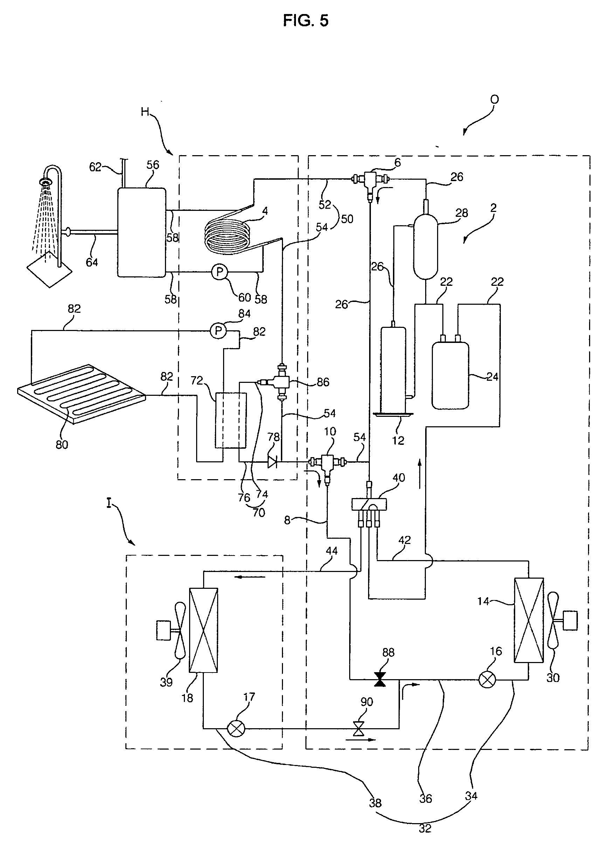

FIG. 5 is a block diagram illustrating the flow of a refrigerant when one embodiment of the heat pump type heating apparatus shown in FIG. 2 performs space heating operation.

The heat pump type heating apparatus, in the case of space heating operation during air conditioning, is operated as follows. The compressor 12 is operated; the refrigerant controller 6 is controlled for the refrigerant to flow into the cooling/heating switching valve 40 while bypassing the hot water supply heat exchanger 4, the water refrigerant heat exchanger 72, and the auxiliary refrigerant controller 10; the auxiliary refrigerant controller 10 is controlled for the refrigerant of the hot water supply outflow flow path 54 to flow into the heat exchanger bypass flow path 8; the outdoor fan 30 and the indoor fan 39 are rotated; the cooling/heating switching valve 40 is operated in a heating mode; the heat exchanger bypass valve 88 is closed; the liquid refrigerant valve 90 is opened; and the hot water pump 60 and the floor heating pump 84 are not operated.

The refrigerant compressed at the compressor 12 at the time of operating the compressor 12 passes through the refrigerant controller 6 and flows into the cooling/heating switching valve 40 by bypassing the hot water supply heat exchanger 4 and the water refrigerant heat exchanger 72; afterwards, the refrigerant is condensed at the indoor heat exchanger 18 by exchanging heat with outdoor air. The refrigerant condensed at the indoor heat exchanger 18 is expanded by at least one of the outdoor expansion apparatus 16 and the indoor expansion apparatus 17 and is evaporated at the outdoor heat exchanger 14. The refrigerant evaporated at the outdoor heat exchanger 14 is recovered by the compressor 12 after passing through the cooling/heating switching valve 40.

In other words, the refrigerant discharged from the compressor 12 is recovered by the compressor 12 after passing through the cooling/heating switching valve 40, the indoor heat exchanger 14, the outdoor expansion apparatus 16, the indoor heat exchanger 17, the outdoor heat exchanger 14, and the cooling/heating switching valve 40 sequentially.

The indoor heat exchanger 18 of the heat pump type heating apparatus condenses the refrigerant; the outdoor heat exchanger 14 evaporates the refrigerant; and the indoor air is heated up by exchanging heat with the indoor heat exchanger 18.

The heat pump type heating apparatus uses the refrigerant to heat up indoor air at the time of space cooling operation.

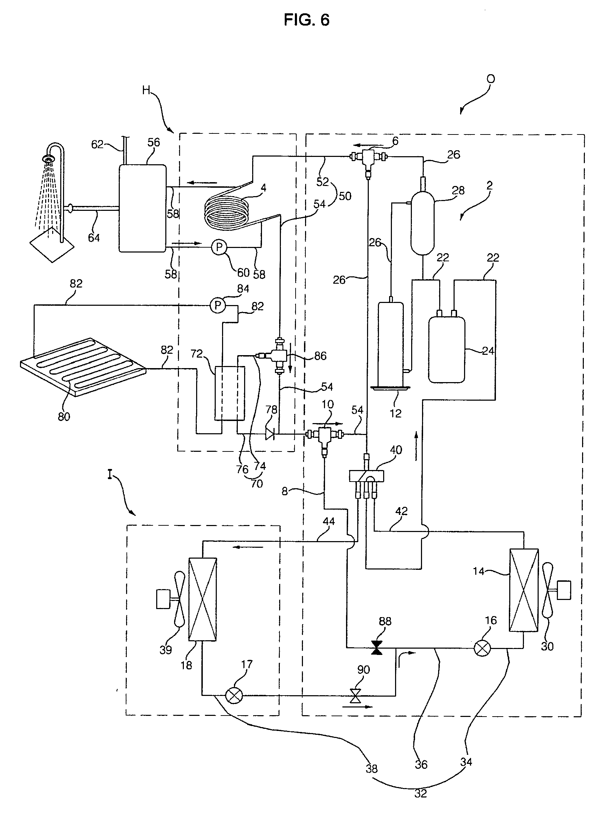

FIG. 6 is a block diagram illustrating the flow of a refrigerant when one embodiment of the heat pump type speed heating apparatus shown in FIG. 2 performs both space heating operation and hot water supply operation.

The heat pump type heating apparatus, in the case of simultaneous operation of space heating and hot water supply, is operated as follows. The compressor 12 is operated; the refrigerant controller 6 is controlled for the refrigerant to flow into the hot water supply heat exchanger 4; the water refrigerant heat exchanger refrigerant controller 86 is controlled for the refrigerant of the hot water supply outflow flow path 54 to bypass the water refrigerant heat exchanger 72; the auxiliary refrigerant controller 10 is controlled for the refrigerant of the hot water supply outflow flow path 54 to bypass the heat exchanger bypass flow path 8; the outdoor fan 30 and the indoor fan 39 is rotated; the cooling/heating switching valve 40 is operated in a heating mode; the heat exchanger bypass valve 88 is closed; the liquid refrigerant valve 90 is opened; the hot water pump 60 are operated; and the floor heating pump 84 is not operated.

At the time of operating the hot water pump 60, the water of the hot water supply tank 56 flows into the hot water supply heat exchanger 4 through the hot water pipe 58 and passes through the hot water supply heat exchanger 4, and then circulates to the hot water supply tank 56.

At the time of operation of the compressor 12, the refrigerant compressed at the compressor passes through the refrigerant controller 6 and the hot water supply inflow flow path 52 and flows into the hot water supply heat exchanger 4; the refrigerant heated at the compressor 12 is condensed by exchanging heat with water while the refrigerant passes through the hot water supply heat exchanger 4. The refrigerant condensed at the hot water supply heat exchanger 4 bypasses the water refrigerant heat exchanger 72 while passing through the hot water supply outflow flow path 54 and passes through the auxiliary refrigerant controller 10 and flows into the cooling/heating switching valve 40. Afterwards, the refrigerant is condensed again at the indoor heat exchanger 18 by exchanging heat with indoor air. The refrigerant condensed at the indoor heat exchanger 18 is expanded in at least one of the outdoor expansion apparatus 16 and the indoor expansion apparatus 17; and evaporated at the outdoor heat exchanger 14. The refrigerant is recovered by the compressor 12 as the refrigerant evaporated at the outdoor heat exchanger 14 passes through the cooling/heating switching valve 40.

In other words, the refrigerant discharged from the compressor 12 is recovered by the compressor 12 after passing through the hot water supply heat exchanger 4, the cooling/heating switching valve 40, the indoor heat exchanger 18, the outdoor expansion apparatus 16, the indoor expansion apparatus 17, the outdoor heat exchanger 14, and the cooling/heating switching valve 40 sequentially.

The hot water supply heat exchanger 4 and the indoor heat exchanger 18 of the heat pump type speed heating apparatus condenses the refrigerant; the outdoor heat exchanger 14 evaporates the refrigerant; indoor air is heated up by exchanging heat with the indoor heat exchanger 18; and the hot water supply heat exchanger 4 heats the water of the hot water supply tank 56.

In the heat pump type heating apparatus, at the time of simultaneous operation of space heating and hot water supply, the refrigerant is used to heat up indoor air after being used for heating water.

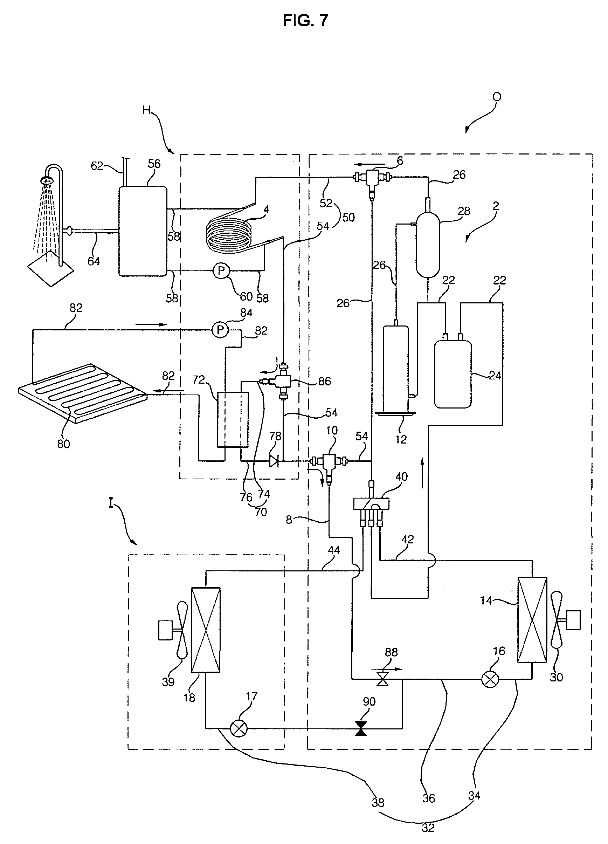

FIG. 7 is a block diagram illustrating the flow of a refrigerant when one embodiment of the heat pump type heating apparatus shown in FIG. 2 performs floor heating operation.

The heat pump type heating apparatus, in the case of floor heating operation, is operated as follows. The compressor 12 is operated; the refrigerant controller 6 is controlled for the refrigerant to flow into the hot water supply heat exchanger 4; the water refrigerant heat exchanger refrigerant controller 86 is controlled for the refrigerant of the hot water supply outflow flow path 54 to pass through the water refrigerant heat exchanger 72; the auxiliary refrigerant controller 10 is controlled for the refrigerant of the hot water supply outflow flow path 54 to pass through the heat exchanger bypass flow path 8; the outdoor fan 30 is rotated; the indoor fan 39 is not rotated; the cooling/heating switching valve 40 is operated in a heating mode; the heat exchanger bypass valve 88 is opened; the liquid refrigerant valve 90 is closed; the hot water pump 60 is not operated; and the floor heating pump 84 is operated.

The water of the floor heating pipe 80, at the time of operating the floor heating pump 84, flows into the water refrigerant heat exchanger 72 through the heating water pipe 82, passes through the water refrigerant heat exchanger 72, and is circulated to the floor heating pipe 80.

At the time of operation of the compressor 12, the refrigerant compressed at the compressor 12 passes through the refrigerant controller 6 and the hot water supply inflow flow path 52 and flows into the hot water supply heat exchanger 4, passes the hot water supply heat exchanger 4 without exchanging heat, and flows into the water refrigerant heat exchanger refrigerant controller 86. The refrigerant which has flowed into the water refrigerant heat exchanger refrigerant controller 86 flows into the water refrigerant heat exchanger 72 through the floor heating inflow flow path 74 and is condensed by exchanging heat with water while passing through the water refrigerant heat exchanger 72. The refrigerant condensed at the water refrigerant heat exchanger 72 flows into the hot water supply outflow flow path 54 through the heating inflow flow path 76 and then flows into the heat exchanger bypass flow path 8 by passing through the auxiliary refrigerant controller 10. The refrigerant which has flowed into the heat exchanger bypass flow path 8 is expanded at the outdoor expansion apparatus 16 after passing through the heat exchanger bypass valve 88 and is evaporated at the outdoor heat exchanger 14 by exchanging heat with outdoor air. The refrigerant evaporated at the outdoor heat exchanger 14 is recovered by the compressor 12 by passing through the cooling/heating switching valve 40.

In other words, the refrigerant discharged from the compressor 12 is recovered by the compressor 12 after passing through the hot water supply heat exchanger 4, the water refrigerant heat exchanger 72, the heat exchanger bypass flow path 8, the outdoor expansion apparatus 16, the outdoor heat exchanger 14, and the cooling/heating switching valve 40 sequentially.

The water refrigerant heat exchanger 72 of the heat pump type heating apparatus condenses the refrigerant; the outdoor heat exchanger 14 evaporates the refrigerant; and the water refrigerant heat exchanger 72 heats the water of the floor heating pipe 80.

The heat pump type heating apparatus uses the refrigerant to heat the water of the floor heating pipe 80 at the time of floor heating operation; therefore, water temperature of the floor heating pipe 80 can be raised more quickly than the case where the refrigerant passes through the indoor heat exchanger 18 or the hot water pump 60 is operated.

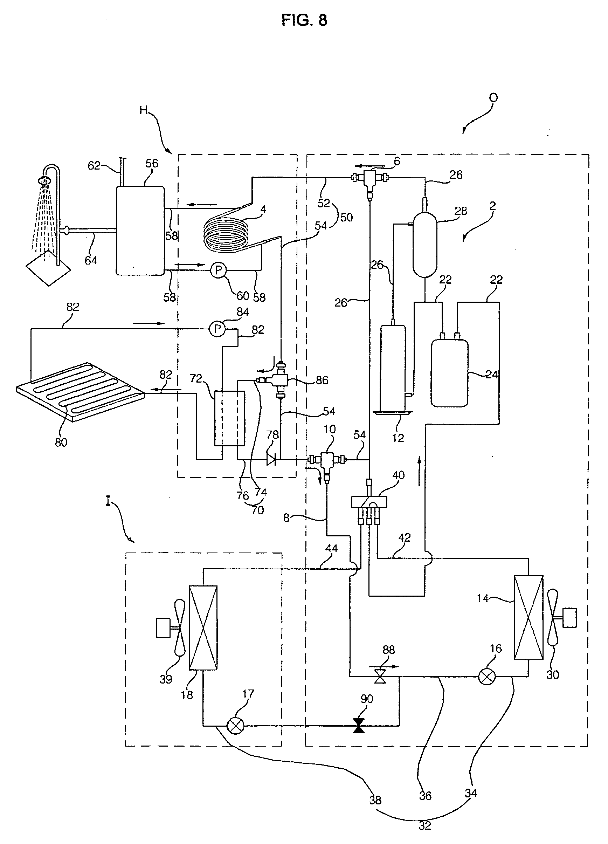

FIG. 8 is a block diagram illustrating the flow of a refrigerant when one embodiment of the heat pump type heating apparatus shown in FIG. 2 performs both floor heating and hot water supply operation.

The heat pump type heating apparatus, in the case of simultaneous operation of floor heating and hot water supply, is operated as follows. The compressor 12 is operated; the refrigerant controller 6 is controlled for the refrigerant to flow into the hot water supply heat exchanger 4; the water refrigerant heat exchanger refrigerant controller 86 is controlled for the refrigerant of the hot water supply outflow flow path 54 to pass through the water refrigerant heat exchanger 72; the auxiliary refrigerant controller 10 is controlled for the refrigerant of the hot water supply outflow flow path 54 to pass through the heat exchanger bypass flow path 8; the outdoor fan 30 is rotated; the indoor fan 39 is not rotated; the cooling/heating switching valve 40 is operated in a heating mode; the heat exchanger bypass valve 88 is opened; the liquid refrigerant valve 90 is closed; the hot water pump 60 are operated; and the floor heating pump 84 is operated.

At the time of operating the hot water pump 60, the water of the hot water supply tank 56 flows into the hot water supply heat exchanger 4 through the hot water pipe 58 and passes through the hot water supply heat exchanger 4 and then circulates to the hot water supply tank 56.

The water of the floor heating pipe 80, at the time of operating the floor heating pump 84, flows into the water refrigerant heat exchanger 72 through the heating water pipe 82 and passes through the water refrigerant heat exchanger 72 and then circulates to the floor heating pipe 80.

At the time of operating the compressor 12, the refrigerant compressed at the compressor 12 flows into the hot water supply heat exchanger 4 after passing through the refrigerant controller 6 and the hot water supply inflow flow path 52; the refrigerant overheated at the compressor 12 while passing through the hot water supply heat exchanger 4 is condensed by exchanging heat with water. The refrigerant condensed at the hot water supply heat exchanger 4 flows into the water refrigerant heat exchanger refrigerant controller 86 and flows into the water refrigerant heat exchanger 72 through the heating inflow flow path 74 and is condensed again by exchanging heat with water while passing through the water refrigerant heat exchanger 72. The refrigerant condensed at the water refrigerant heat exchanger 72 flows into the hot water supply outflow flow path 54 through the heating inflow flow path 76 and then flows into the heat exchanger bypass flow path 8 by passing through the auxiliary refrigerant controller 10. The refrigerant which has flowed into the heat exchanger bypass flow path 8 is expanded at the outdoor expansion apparatus 16 after passing through the heat exchanger bypass flow path 88; afterwards, the refrigerant is evaporated at the outdoor heat exchanger 14 by exchanging heat with outdoor air. The refrigerant evaporated at the outdoor heat exchanger 14 is recovered by the compressor 12 after passing through the cooling/heating switching valve 40.

In other words, the refrigerant discharged at the compressor 12 is recovered by the compressor 12 after passing through the hot water supply heat exchanger 4, the water refrigerant heat exchanger 72, the heat exchanger bypass flow path 8, the outdoor expansion apparatus 16, the outdoor heat exchanger 14, and the cooling/heating switching valve 40 sequentially.

The hot water supply heat exchanger 4 and the water refrigerant heat exchanger 72 of the heat pump type speed heating apparatus condenses the refrigerant sequentially; the outdoor heat exchanger 14 evaporates the refrigerant; the hot water supply heat exchanger 4 heats the water of the hot water supply tank 56; and the water refrigerant heat exchanger 72 heats the water of the floor heating pipe 80.

The heat pump type heating apparatus uses the refrigerant to heat the water of the hot water supply tank 56 and the floor heating pipe 80 at the time of simultaneous operation of floor heating and hot water supply; therefore, water temperature of the hot water supply tank 56 and the floor heating pipe 80 can be raised more quickly than the case where the refrigerant passes through the indoor heat exchanger 18.

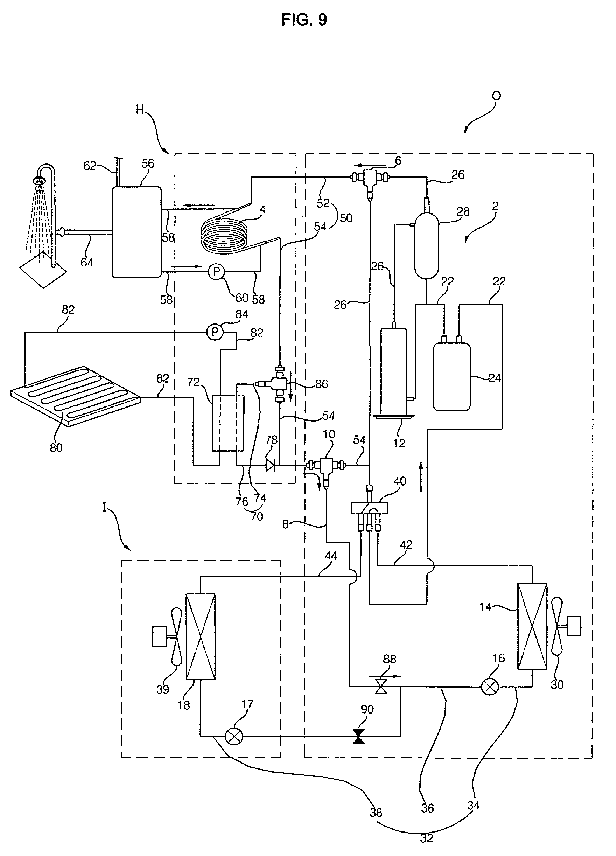

FIG. 9 is a block diagram illustrating the flow of a refrigerant when one embodiment of a heat pump type heating apparatus shown in FIG. 2 performs hot water supply operation.

The heat pump type heating apparatus, in the case of hot water supply operation, is operated as follows. The compressor 12 is operated; the refrigerant controller 6 is controlled for the refrigerant to flow into the hot water supply heat exchanger 4; the water refrigerant heat exchanger refrigerant controller 86 is controlled for the refrigerant of the hot water supply outflow flow path 54 to bypass the water refrigerant heat exchanger 72; the auxiliary refrigerant controller 10 is controlled for the refrigerant of the hot water supply outflow flow path 54 to pass through the heat exchanger bypass flow path 8; the outdoor fan 30 is rotated; the indoor fan 39 is not rotated; the cooling/heating switching valve 40 is operated in a heating mode; the heat exchanger bypass valve 88 is opened; the liquid refrigerant valve 90 is closed; the hot water pump 60 are operated; and the floor heating pump 84 is not operated.

At the time of operating the hot water pump 60, the water of the hot water supply tank 56 flows into the hot water supply heat exchanger 4 through the hot water pipe 58; the water of the hot water supply tank 4 then passes through the hot water supply heat exchanger 4 and is circulated to the hot water supply tank 56.

At the time of operating the compressor 12, the refrigerant compressed at the compressor 12 flows into the hot water supply heat exchanger 4 after passing through the refrigerant controller 6 and the hot water supply inflow flow path 52; the refrigerant overheated at the compressor 12 while passing through the hot water supply heat exchanger 4 is condensed by exchanging heat with water. The refrigerant condensed at the hot water supply heat exchanger 4 flows into the water refrigerant heat exchanger refrigerant controller 86 and bypasses the water refrigerant heat exchanger 72 and flows into the auxiliary refrigerant controller 10. The refrigerant which has flowed into the auxiliary refrigerant controller 10 flows into the heat exchanger bypass flow path 8 and is expanded at the outdoor expansion apparatus 16 after passing through the heat exchanger bypass valve 88. The refrigerant expanded in the outdoor expansion apparatus 16 is evaporated in the outdoor heat exchanger 14 by exchanging heat with outdoor air and is recovered by the compressor 12 after passing through the cooling/heating switching valve 40.

In other words, the refrigerant discharged from the compressor 12 is recovered by the compressor 12 after passing through the hot water supply heat exchanger 4, the heat exchanger bypass flow path 8, the outdoor expansion apparatus 16, the outdoor heat exchanger 14, and the cooling/heating switching valve 40 sequentially.

The hot water supply heat exchanger 4 of the heat pump type heating apparatus condenses the refrigerant; the outdoor heat exchanger 14 evaporates the refrigerant; and the hot water supply heat exchanger 4 heats the water of the hot water supply tank 56.

The heat pump type heating apparatus uses the refrigerant to heat the water of the hot water supply tank 56 at the time of hot water supply operation; therefore, water temperature of the hot water supply tank 56 can be raised more quickly than the case where the refrigerant passes through the indoor heat exchanger 18.

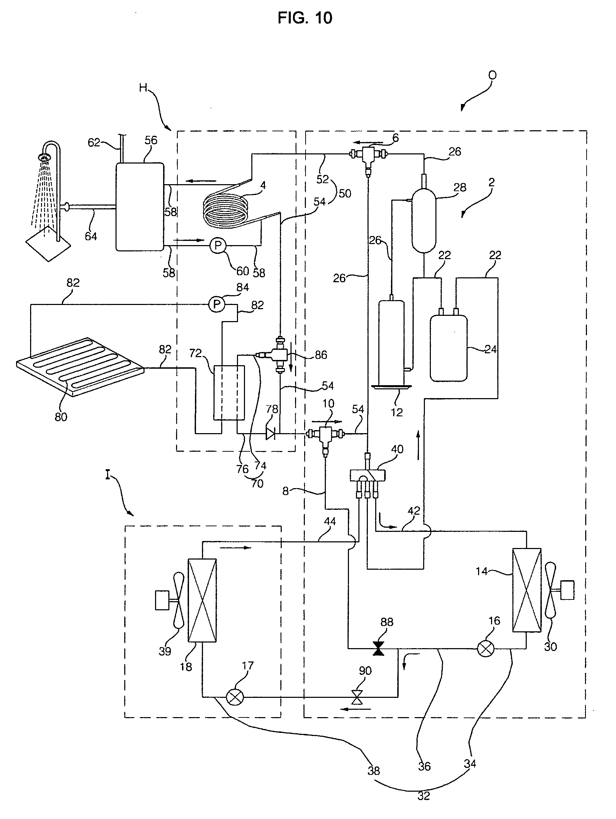

FIG. 10 is a block diagram illustrating the flow of a refrigerant when one embodiment of the heat pump type heating apparatus shown in FIG. 9 performs defrosting operation in the middle of hot water supply operation.

Since the outdoor heat exchanger 14 of the heat pump type speed heating apparatus functions as an evaporator at the time of operation of hot water supply, frost can be developed at the outdoor heat exchanger 14. If defrosting conditions are met for the outdoor heat exchanger 14, the outdoor heat exchanger is switched to defrost while the heat pump type speed heating apparatus continues hot water supply operation.

The heat pump type heating apparatus controls the auxiliary refrigerant controller 10 for the refrigerant which has passed the hot water supply heat exchanger 4 to bypass the heat exchanger bypass flow path 8 and switches the cooling cycle circuit 2 from heating operation to cooling operation.

At this time, the defrosting conditions are such that accumulated time of the hot water supply operation is a predetermined time or more; and the temperature of the outdoor heat exchanger 14 is a predetermined temperature or less for a predetermined time period or more.

The auxiliary refrigerant controller 10 of the heat pump type speed heating apparatus controls the refrigerant to flow into the cooling/heating switching valve 40 during hot water supply operation; the cooling/heating switching valve 40 is operated in a cooling mode; the liquid refrigerant valve 90 is opened; and the heat exchanger bypass valve 88 is closed.

The refrigerant condensed while passing through the hot water supply heat exchanger 4 after compressed by the compressor 12 bypasses the heat exchanger bypass flow path 8 as the refrigerant passes through the auxiliary refrigerant controller 10 and flows into the cooling/heating switching valve 40. The refrigerant which has passed the cooling/heating switching valve 40 flows into the outdoor heat exchanger 14 and condensed again while defrosting the outdoor heat exchanger 14; afterwards, the first refrigerant expands as the first refrigerant passes through at least one of the outdoor expansion apparatus 16 and the indoor expansion apparatus 17 and is evaporated as the first refrigerant passes through the indoor heat exchanger 18. The refrigerant evaporated at the indoor heat exchanger 18 passes through the cooling/heating switching valve 40 and is recovered by the compressor 12.

In other words, the refrigerant discharged from the compressor 12 is recovered by the compressor 12 after passing through the hot water supply heat exchanger 4, the cooling/heating switching valve 40, the outdoor heat exchanger 14, the outdoor expansion apparatus 16, the indoor expansion apparatus 17, the indoor heat exchanger 18, and the cooling/heating switching valve 40 sequentially.

The heat pump type heating apparatus is defrosted as the hot water supply heat exchanger 4 condenses the refrigerant and the outdoor heat exchanger 14 condenses the refrigerant again; and the hot water supply heat exchanger 4 heats the water of the hot water supply tank 56.

Since the outdoor heat exchanger 14 is defrosted as the refrigerant continuously heats the water of the hot water supply tank 56 at the time of hot water supply operation of the heat pump type speed heating apparatus, water temperature of the hot water supply tank 56 can be raise more quickly and efficiency of hot water supply is enhanced.

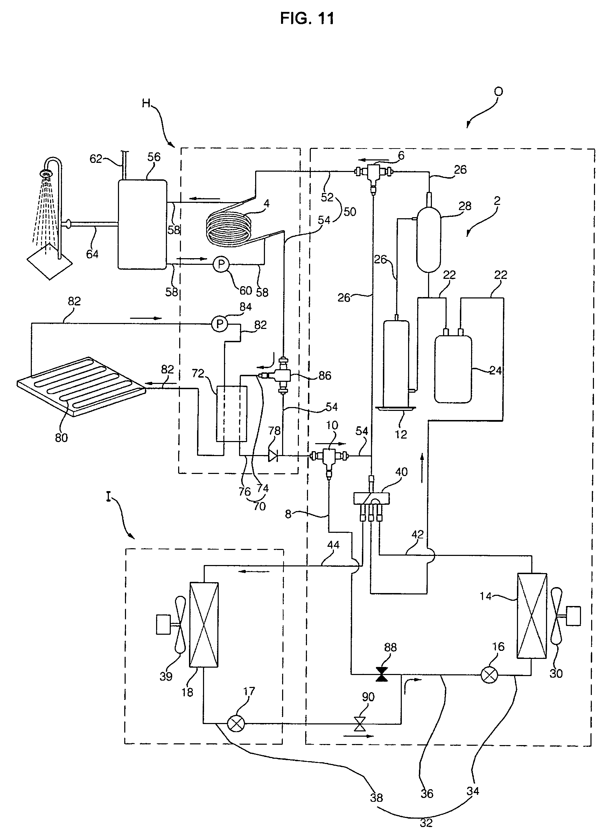

FIG. 11 is a block diagram illustrating the flow of a refrigerant when one embodiment of the heat pump type heating apparatus shown in FIG. 2 performs space heating, floor heating, and hot water supply operation.

The heat pump type heating apparatus, in the case of simultaneous operation of space heating, floor heating and hot water supply, is operated as follows. The compressor 12 is operated; the refrigerant controller 6 is controlled for the refrigerant to flow into the hot water supply heat exchanger 4; the water refrigerant heat exchanger refrigerant controller 86 is controlled for the refrigerant of the hot water supply outflow flow path 54 to pass through the water refrigerant heat exchanger 72; the auxiliary refrigerant controller 10 is controlled for the refrigerant of the hot water supply outflow flow path 54 to bypass the heat exchanger bypass flow path 8; the outdoor fan 30 is rotated; the indoor fan 39 is rotated; the cooling/heating switching valve 40 is operated in a heating mode; the heat exchanger bypass valve 88 is closed; the liquid refrigerant valve 90 is opened; the hot water pump 60 are operated; and the floor heating pump 84 is operated.

At the time of operating the hot water pump 60, the water of the hot water supply tank 56 flows into the hot water supply heat exchanger 4 through the hot water pipe 58 and is circulated to the hot water supply tank 56 after passing through the hot water supply heat exchanger 4.

At the time of operating the floor heating pump 84, the water of the floor heating pipe 80 flows into the water refrigerant heat exchanger 72 through the heating water pipe 82 and is circulated to the floor heating pipe 80 after passing through the water refrigerant heat exchanger 72.

At the time of operating the compressor 12, the refrigerant compressed at the compressor 12 flows into the hot water supply heat exchanger 4 after passing through the refrigerant controller 6 and the hot water supply inflow flow path 52; the refrigerant overheated at the compressor 12 while passing through the hot water supply heat exchanger 4 is condensed by exchanging heat with water. The refrigerant condensed at the hot water supply heat exchanger 4 flows into the water refrigerant heat exchanger refrigerant controller 86 and flows into the water refrigerant heat exchanger 72 through the heating inflow flow path 74 and is condensed again by exchanging heat with water while passing through the water refrigerant heat exchanger 72. The refrigerant condensed at the water refrigerant heat exchanger 72 flows into the hot water supply outflow flow path 54 through the heating inflow flow path 76 and then passes through the auxiliary refrigerant controller 10, flowing into the cooling/heating switching valve 40 while bypassing the heat exchanger bypass flow path 8. The refrigerant which has flowed into the cooling/heating switching valve 40 flows into the indoor heat exchanger 18 and is condensed additionally; the refrigerant is expanded in at least one of the indoor expansion apparatus 17 and the outdoor expansion apparatus 16 and is then evaporated at the outdoor heat exchanger 14 by exchanging heat with outdoor air. The refrigerant evaporated at the outdoor heat exchanger 14 is recovered by the compressor 12 after passing through the cooling/heating switching valve 40.

In other words, the refrigerant discharged from the compressor 12 is recovered by the compressor 12 after passing through the hot water supply heat exchanger 4, the water refrigerant heat exchanger 72, the cooling/heating switching valve 40, the indoor heat exchanger 18, the indoor expansion apparatus 17, the outdoor expansion apparatus 16, the outdoor heat exchanger 14, and the cooling/heating switching valve 40 sequentially.

The hot water heat exchanger 4, the water refrigerant heat exchanger 72, and the indoor heat exchanger 18 of the heat pump type heating apparatus condenses the refrigerant sequentially for three times in total. The outdoor heat exchanger 14 evaporates the refrigerant; the hot water supply heat exchanger 4 heats the water of the hot water supply tank 56; and the water refrigerant heat exchanger 72 heats the water of the floor heating pipe 80.

At the time of simultaneous operation of floor heating, hot water supply, and space heating, the refrigerant is used to heat the water of the hot water supply tank 56, the water of the floor heating pipe 80, and indoor air together; therefore, the heat pump type heating apparatus can efficiently perform hot water supply, floor heating, and space heating.

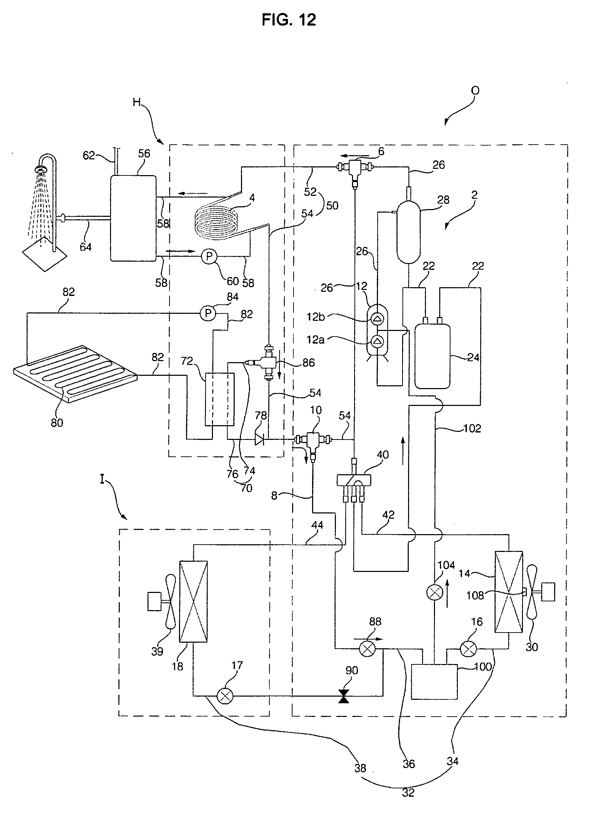

FIG. 12 is a block diagram of another embodiment of a heat pump type heating apparatus according to the present invention.

The heat pump type heating apparatus according to the present embodiment can be comprised of a multi-stage compressor where the compressor 12 compresses the refrigerant in multi-step.

The compressor 12 can comprise a low pressure side compression unit 12a and a high pressure compression unit 12b connected to the low pressure compression unit 12a to compress the refrigerant compressed at the low pressure compression unit 12a.

The low pressure compression unit 12a and the high pressure compression unit 12b of the compressor 12 can be connected to each other in series. An inflow flow path 22 of the compressor can be connected to the low pressure compression unit 12a and a discharge flow path 26 of the compressor can be connected to the high pressure compression unit 12b.

A gas-liquid separator 100 can be installed between the outdoor expansion apparatus 16 and the indoor expansion apparatus 17 of the heat pump type speed heating apparatus; an injection line 102 which injects a vaporized refrigerant by using the compressor 12 can be connected to the gas-liquid separator 100.

The gas-liquid separator 100 can be installed between the heat exchanger bypath flow path 8 and the outdoor expansion apparatus 16 to inject the vaporized refrigerant to the compressor 12 at the time of simultaneous operation of hot water supply and heating, hot water supply operation, or heating operation.

An injection refrigerant controller 104 can be installed at the injection line 102 to control the refrigerant which is injected into the compressor 12.

The injection refrigerant controller 104 is intended to control the vaporized refrigerant which has flowed out from the gas-liquid separator 100; the injection refrigerant controller 104 can be composed of an opening and closing valve whose opening and closing is controlled by on-off control; the injection refrigerant controller 104 can also be composed of an electronic expansion valve whose opening angle is controlled.

The injection refrigerant controller 104 can be closed at the time of starting operation of the heat pump type speed heating apparatus and can be opened after stabilization of the heat pump type speed heating apparatus according to the temperature of the outdoor heat exchanger 14.

A temperature sensor 108 which senses temperature can be installed at the outdoor heat exchanger 14 and the injection refrigerant controller 104 can be opened if the sensed temperature of the temperature sensor 108 is a predetermined temperature or less after stabilization of the heat pump type heating apparatus.

The heat pump type heating apparatus can comprise an electronic expansion valve which lowers the pressure of the refrigerant injected to the injection line 102 to an intermediate pressure between condensation pressure of the hot water supply heat exchanger 4 and evaporation pressure of the outdoor heat exchanger 14 while preventing the liquid refrigerant inside the gas-liquid separator 100 from flowing into the injection line 102 at the time of simultaneous operation of hot water supply and heating, hot water supply operation, or heating operation.

It is preferred that the electronic expansion valve is installed between the auxiliary refrigerant controller 10 and the gas-liquid separator 100; the electronic expansion valve can be installed between the heat exchanger bypass valve 88 of one embodiment of the present invention and the gas-liquid separator 100; the electronic expansion valve can also be installed between the auxiliary refrigerant controller 10 of one embodiment of the present invention and the heat exchanger bypass valve 88.

If the heat exchanger bypass valve 88 of the heat pump type heating apparatus is composed of an electronic expansion valve, at the time of simultaneous operation of hot water supply and floor heating, hot water supply operation, or floor heating operation, the pressure of the refrigerant which passes through the heat exchanger bypass flow path 8 is lowered to an intermediate pressure between condensation pressure and evaporation pressure; when the heat pump type speed heating apparatus performs defrosting operation in the middle of hot water supply operation, simultaneous operation of air conditioning and hot water supply, simultaneous operation of air conditioning, hot water supply, and flow heating, or air conditioning operation, the heat exchanger bypass valve 96 can be closed.

Since the remaining structure and functions except for the compressor 12, the heat exchanger bypass valve 88, the gas-liquid separator 100, the injection line 102, and the injection refrigerant controller 104 are identical or similar to one embodiment of the present invention, the same symbols are used and detailed description corresponding thereto is omitted.

In what follows, description is provided with an example of hot water supply operation.

The heat pump type heating apparatus, at the time of hot water supply operation, is operated as described in one embodiment of the present invention; if the outdoor heat exchanger 14 is at a predetermined temperature or less while the heat pump type heating apparatus is stabilized after starting, the heat exchanger bypass valve 88 expands the refrigerant to a pressure between condensation pressure of the hot water supply heat exchanger 4 and evaporation pressure of the outdoor heat exchanger 14 and the injection refrigerant controller 104 is opened.

At the time of refrigerant expansion of the heat exchanger bypass valve 88 and opening of the injection refrigerant controller 88, a refrigerant with intermediate pressure injected through the injection line 102 flows between the low pressure compression unit 12a and the high pressure compression unit 12b of the compressor 12. Therefore, compression period can be reduced according to the injection of the refrigerant with intermediate pressure; effective hot water supply can be made possible at a cold area or at low outdoor temperature due to increase of condensation capacity of the hot water supply heat exchanger 4; and a highest management temperature of the compressor 12 can be lowered.

Even at the time of simultaneous operation of floor heating and hot water supply or floor heating operation, a refrigerant of intermediate pressure as described above can be injected to the compressor 12 and efficient operation can be made possible for the heat pump type speed heating apparatus.

Meanwhile, the present invention is not limited to the embodiment above but the heat pump type speed heating apparatus can also be operated by at least one of air conditioning operation and hot water supply operation without floor heating operation and not including the water refrigerant heat exchanger connecting flow path 70, the water refrigerant heat exchanger 72, the check valve 78, the floor heating pipe 80, the heating water pipe 82, the floor heating pump 84, and the water refrigerant heat exchanger refrigerant controller 86; various embodiments can be possible within the technical scope as defined in the claims, to which the present invention belongs.

The heat pump type heating apparatus according to the present invention, at the time of hot water supply operation, can improve hot water supply performance as the refrigerant which has passed the hot water supply heat exchanger bypasses either of the indoor heat exchanger and the outdoor heat exchanger; at the time of simultaneous operation of hot water supply and air conditioning, the refrigerant which has been condensed while heating the hot water supply heat exchanger performs air conditioning by passing through both the indoor heat exchanger and the outdoor heat exchanger, thereby improving the efficiency.

Also, hot water supply can be provided continuously by defrosting the outdoor heat exchanger during hot water supply operation.

In addition, at the time of hot water supply operation, as the refrigerant at an intermediate pressure between condensation pressure and evaporation pressure is injected into the compressor, prevented is degradation of hot water supply performance under outdoor low temperature environments; efficiency of hot water supply is high since condensation performance of the hot water supply heat exchanger can be improved.

Furthermore, hot water supply, floor heating, and space air conditioning can be performed together.

## Claims

1. A heat pump type heating apparatus comprising:
a cooling cycle circuit (2) capable of operating air conditioning, including a compressor (12), an outdoor heat exchanger (14), an expansion apparatus (16, 17), and an indoor heat exchanger (18);
a hot water supply heat exchanger (4) connected to the cooling cycle circuit (2) through a hot water supply flow path (50) for a refrigerant discharged from the compressor (12) to be condensed, expanded, and evaporated in the cooling cycle circuit (2) after being used for hot water supply;
a refrigerant controller (6) configured to control flow direction of the refrigerant discharged from the compressor (12) for the refrigerant discharged from the compressor (12) to pass through or bypass the hot water supply heat exchanger (4); and
a heat exchanger bypass flow path (8) connected to guide the refrigerant which has passed the hot water heat exchanger (4) between the outdoor heat exchanger (14) and the indoor heat exchanger (18) to bypass either of the outdoor heat exchanger (14) and the indoor heat exchanger (18),
**characterized in that** the apparatus further comprising:
a water refrigerant heat exchanger (72) connected to the hot water supply flow path (50) through a water refrigerant heat exchanger connecting flow path (70) for the refrigerant which has passed the hot water supply heat exchanger (4) to flow into the hot water supply flow path (50) after heating water,
a floor heating pipe (80) connected to the water refrigerant heat exchanger (72) through a heating water pipe, (82) and a floor heating pump (84) installed in the heating water pipe (82), and
a water refrigerant heat exchanger refrigerant controller (86) configured to control flow direction of a refrigerant so that the refrigerant which has passed the hot water supply heat exchanger (4) passes through or bypasses the water refrigerant heat exchanger (72).

2. The apparatus of claim 1, wherein the refrigerant controller (6) is configured to control refrigerant flow so that a refrigerant flows into the hot water supply heat exchanger (4) at the time of hot water supply operation or simultaneous operation of hot water supply and air conditioning.

3. The apparatus of claim 1, wherein the refrigerant controller (6) is configured to control refrigerant flow so that a refrigerant bypasses the hot water supply heat exchanger (4) at the time of air conditioning operation.

4. The apparatus of claim 1, 2, or 3, further comprising an auxiliary refrigerant controller (10) configured to control flow direction of a refrigerant which has passed the hot water supply heat exchanger (4) so that the refrigerant which has passed the hot water supply heat exchanger (4) either passes through or bypasses the heat exchanger bypass flow path (8).

5. The apparatus of claim 4, wherein the auxiliary refrigerant controller (10) is configured to control refrigerant flow so that a refrigerant flows through the heat exchanger bypass flow path (8) at the time of hot water supply operation.

6. The apparatus of claim 5, wherein, if defrosting conditions are met during the hot water supply operation, the auxiliary refrigerant controller (10) is controlled in such a way that a refrigerant bypasses the heat exchanger bypass flow path (8); and the cooling cycle circuit (2) is switched from heating operation to cooling operation.

7. The apparatus of claim 5, wherein the auxiliary refrigerant controller (10) is configured to control refrigerant flow in such a way that a refrigerant bypasses the heat exchanger bypass flow path (8) when hot water supply and air conditioning are operated at the same time.

8. The apparatus of any of claims 1 to 7, wherein the expansion apparatus (16, 17) comprise an indoor expansion apparatus (17) and an outdoor expansion apparatus (16); and
one end of the heat exchanger bypass flow path (8) is connected to the hot water supply flow path (50) and the other end thereof is connected between the indoor expansion apparatus (17) and the outdoor expansion apparatus (16).

9. The apparatus of claim 8, further comprising a heat exchanger bypass valve (88) which is installed in the heat exchanger bypass flow path (8) and configured to control flow of a refrigerant.

10. The apparatus of claim 9, further comprising a liquid refrigerant valve (90) which is installed between the heat exchanger bypass flow path (8) and the indoor expansion apparatus (17) and configured to control flow of a refrigerant.

11. The apparatus of any of claims 1 to 10, wherein the expansion apparatus (16, 17) comprise an indoor expansion apparatus (17) and an outdoor expansion apparatus (16);
the heat pump type speed heating apparatus further comprises a gas-liquid separator (100) installed between the indoor expansion apparatus (17) and the outdoor expansion apparatus (16) and
an injection line (102) which injects vaporized refrigerant of the gas-liquid separator (100) to the compressor (12).

12. The apparatus of any of claims 1 to 11, wherein the cooling cycle circuit further comprises a cooling/heating switching valve (40) configured to switch between cooling operation and heating operation;
the hot water supply flow path (50) comprises a hot water supply inflow flow path (52) leading the refrigerant which has been compressed in the compressor (12) to the hot water supply heat exchanger (4) and a hot water outflow flow path (54) leading the refrigerant which has flowed out from the hot water supply heat exchanger (4) to the cooling/heating switching valve (40);
the hot water supply inflow flow path (52) and the hot water supply outflow flow path (54) are connected to the compressor (12) and the cooling/heating switching valve (40) respectively; and
the heat exchanger bypass flow path (8) is connected to the hot water supply outflow flow path (54).

## Patentansprüche

1. Heizvorrichtung vom Wärmepumpentyp, die aufweist:
einen Kühlkreislaufkreis (2), der fähig ist, Klimatisierung zu betreiben, der einen Kompressor (12), einen Außenwärmetauscher (14), eine Expansionsvorrichtung (16, 17) und einen Innenwärmetauscher (18) umfasst;
einen Heißwasserversorgungswärmetauscher (4), der durch einen Heißwasserzuführungsströmungsweg (50) für Kältemittel, das von dem Kompressor (12) abgegeben wird, mit dem Kühlkreislaufkreis (2) verbunden ist, um in dem Kühlkreislaufkreis (2) kondensiert, expandiert und verdampft zu werden, nachdem es für die Heißwasserversorgung verwendet wurde;
eine Kältemittelsteuerung (6), die konfiguriert ist, um die Strömungsrichtung des von dem Kompressor (12) abgegebenen Kältemittels zu steuern, damit das von dem Kompressor (12) abgegebene Kältemittel einen Heißwasserversorgungswärmetauscher (4) durchläuft oder ihn umgeht; und
einen Wärmetauscherumleitungsweg (8), der verbunden ist, um das Kältemittel, das den Heißwasserwärmetauscher (4) zwischen dem Außenwärmetauscher (14) und dem Innenwärmetauscher (18) durchlaufen hat, zu leiten, so dass es den Außenwärmetauscher (14) und den Innenwärmetauscher (18) beide umgeht,
**dadurch gekennzeichnet, dass** die Vorrichtung ferner aufweist:
einen Wasser-Kältemittelwärmetauscher (72), der durch einen Wasser-Kältemittelwärmetauscherströmungsweg (70) mit dem Heißwasserzuführungsströmungsweg (50) verbunden ist, damit das Kältemittel, das den Heißwasserversorgungswärmetauscher (4) durchlaufen hat, nach dem Heizen des Wasser in den Heißwasserzuführungsströmungsweg (50) strömt,
eine Bodenheizrohrleitung (80), die durch eine Heizwasserrohrleitung (82) und eine in der Heizwasserrohrleitung (82) installierte Bodenheizpumpe (84) mit dem Wasser-Kältemittelwärmetauscher (72) verbunden ist, und
eine Wasser-Kältemittelwärmetauschersteuerung (86), die konfiguriert ist, um die Strömungsrichtung eines Kältemittels zu steuern, so dass das Kältemittel, das den Wasserversorgungswärmetauscher (4) durchlaufen hat, den Wasser-Kältemittelwärmetauscher (72) durchläuft oder umgeht.

2. Vorrichtung nach Anspruch 1, wobei die Kältemittelsteuerung (6) konfiguriert ist, um die Kältemittelsteuerung zu steuern, so dass zu der Zeit des Heißwasserversorgungsbetriebs oder des gleichzeitigen Betriebs der Heißwasserversorgung und der Klimatisierung ein Kältemittel in den Heißwasserversorgungwärmetauscher (4) strömt.

3. Vorrichtung nach Anspruch 1, wobei die Kältemittelsteuerung (6) konfiguriert ist, um die Kältemittelströmung derart zu steuern, dass ein Kältemittel zu der Zeit des Klimatisierungsbetriebs den Heißwasserversorgungwärmetauscher (4) umgeht.

4. Vorrichtung nach Anspruch 1, 2, oder 3, die ferner eine Hilfskältemittelsteuerung (10) aufweist, die konfiguriert ist, um die Strömungsrichtung eines Kältemittels, das den Heißwasserversorgungwärmetauscher (4) durchlaufen hat, derart zu steuern, dass das Kältemittel, das den Heißwasserversorgungwärmetauscher (4) durchlaufen hat, entweder den Wärmetauscherumleitungsströmungsweg (8) durchläuft oder ihn umgeht.

5. Vorrichtung nach Anspruch 4, wobei die Hilfskältemittelsteuerung (10) konfiguriert ist, um die Kältemittelströmung derart zu steuern, dass zu einer Zeit des Heißwasserversorgungsbetriebs ein Kältemittel durch den Wärmetauscherumleitungsströmungsweg (8) strömt.

6. Vorrichtung nach Anspruch 5, wobei die Hilfskältemittelsteuerung (10) in einer derartigen Weise gesteuert wird, dass ein Kältemittel den Wärmetauscherumleitungsströmungsweg (8) umgeht, wenn während des Heißwasserversorgungsbetriebs Entfrostungsbedingungen erfüllt sind; und der Kühlkreislaufkreis (2) von dem Heizbetrieb auf den Kühlbetrieb geschaltet wird.

7. Vorrichtung nach Anspruch 5, wobei die Hilfskältemittelsteuerung (10) konfiguriert ist, um die Kältemittelströmung in einer derartigen Weise zu steuern, dass ein Kältemittel den Wärmetauscherumleitungsströmungsweg (8) umgeht, wenn die Heißwasserversorgung und die Klimatisierung gleichzeitig betrieben werden.

8. Vorrichtung nach Anspruch 1 bis 7, wobei die Expansionsvorrichtung (16, 17) eine Innenexpansionsvorrichtung (17) und eine Außenexpansionsvorrichtung (16) aufweist; und
ein Ende des Wärmetauscherumleitungsströmungswegs (8) mit dem Heißwasserzuführungsströmungsweg (50) verbunden ist und sein anderes Ende zwischen der Innenexpansionsvorrichtung (17) und der Außenexpansionsvorrichtung (16) angeschlossen ist.

9. Vorrichtung nach Anspruch 8, die ferner ein Wärmetauscherumleitungsventil (88) aufweist, das in dem Wärmetauscherumleitungsströmungsweg (8) installiert ist und konfiguriert ist, um die Strömung eines Kältemittels zu steuern.

10. Vorrichtung nach Anspruch 9, die ferner ein Ventil (90) für flüssiges Kältemittel aufweist, das zwischen dem Wärmetauscherumleitungsströmungsweg (8) und der Innenexpansionsvorrichtung (17) installiert ist und konfiguriert ist, um die Strömung eines Kältemittels zu steuern.

11. Vorrichtung nach einem der Ansprüche 1 bis 10, wobei die Expansionsvorrichtungen (16, 17) eine Innenexpansionsvorrichtung (17) und eine Außenexpansionsvorrichtung (16) aufweisen;
wobei die Wärmpumpen-Schnellheizvorrichtung ferner einen Gas-Flüssigkeitsabscheider (100) aufweist, der zwischen der Innenexpansionsvorrichtung (17) und der Außenexpansionsvorrichtung (16) installiert ist, und
eine Einspritzleitung (102), die verdampftes Kältemittel des Gas-Flüssigkeitsabscheiders (100) zu dem Kompressor (12) einspritzt.

12. Vorrichtung nach einem der Ansprüche 1 bis 11, wobei der Kühlkreislaufkreis ferner ein Kühl-/Heizumschaltventil (40) aufweist, das konfiguriert ist, um zwischen Kühlbetrieb und Heizbetrieb umzuschalten;
wobei der Heißwasserzuführungsströmungsweg (50) einen Heißwasserzuführungzuströmungsweg (52), der das Kältemittel, das in dem Kompressor (12) komprimiert wurde, zu dem Heißwasserversorgungwärmetauscher (4) leitet, und einen Heißwasserausströmungsweg (54), der das Kältemittel, das aus dem Heißwasserversorgungwärmetauscher (4) geströmt ist, zu dem Kühl-/Heizumschaltventil (40) leitet, aufweist;
wobei der Heißwasserzuführungzuströmungsweg (52) und der Heißwasserausströmungsweg (54) jeweils mit dem Kompressor (12) und dem Kühl-/Heizumschaltventil (40) verbunden sind; und
wobei der Wärmetauscherumleitungsströmungsweg (8) mit dem Heißwasserausströmungsweg (54) verbunden ist.

## Revendications

1. Appareil de chauffage de type pompe à chaleur comprenant :
un circuit de cycle de refroidissement (2) pouvant faire fonctionner la climatisation, comprenant un compresseur (12), un échangeur de chaleur extérieur (14), un appareil d'expansion (16, 17) et un échangeur de chaleur intérieur (18) ;
un échangeur de chaleur d'amenée d'eau chaude (4) relié au circuit de cycle de refroidissement (2) par une voie d'écoulement d'amenée d'eau chaude (50) pour un réfrigérant évacué du compresseur (12) à condenser, expanser et évaporer dans le circuit de cycle de refroidissement (2) après avoir été utilisé pour l'amenée d'eau chaude ;
un contrôleur de réfrigérant (6) configuré pour commander la direction d'écoulement du réfrigérant évacué du compresseur (12) pour le réfrigérant évacué du compresseur (12) pour passer au travers de l'échangeur de chaleur d'amenée d'eau chaude (4) ou l'éviter ; et
une voie d'écoulement d'évitement d'échangeur de chaleur (8) reliée pour guider le réfrigérant qui a passé l'échangeur de chaleur d'eau chaude (4) entre l'échangeur de chaleur extérieur (14) et l'échangeur de chaleur intérieur (18) pour éviter l'un de l'échangeur de chaleur extérieur (14) et l'échangeur de chaleur intérieur (18),
**caractérisé en ce que** l'appareil comprend en outre :
un échangeur de chaleur de réfrigérant d'eau (72) relié à la voie d'écoulement d'amenée d'eau chaude (50) par une voie d'écoulement reliant l'échangeur de chaleur de réfrigérant d'eau (70) pour le réfrigérant qui a passé l'échangeur de chaleur d'amenée d'eau chaude (4) pour s'écouler dans la voie d'écoulement d'amenée d'eau chaude (50) après le chauffage de l'eau,
un tuyau de chauffage de plancher (80) relié à l'échangeur de chaleur de réfrigérant d'eau (72) par un tuyau d'eau de chauffage (82) et une pompe de chauffage de plancher (84) installée dans le tuyau d'eau de chauffage (82) et
un contrôleur de réfrigérant d'échangeur de chaleur de réfrigérant d'eau (86) configuré pour commander la direction d'écoulement d'un réfrigérant de sorte que le réfrigérant qui a passé l'échangeur de chaleur d'amenée d'eau chaude (4) passe au travers de l'échangeur de chaleur de réfrigérant d'eau (72) ou l'évite.

2. Appareil selon la revendication 1, dans lequel le contrôleur de réfrigérant (6) est configuré pour commander l'écoulement de réfrigérant de sorte qu'un réfrigérant s'écoule dans l'échangeur de chaleur d'amenée d'eau chaude (4) au moment de l'opération d'amenée d'eau chaude ou l'opération simultanée d'amenée d'eau chaude et de climatisation.

3. Appareil selon la revendication 1, dans lequel le contrôleur de réfrigérant (6) est configuré pour commander l'écoulement de réfrigérant de sorte qu'un réfrigérant évite l'échangeur de chaleur d'amenée d'eau chaude (4) au moment de l'opération de climatisation.

4. Appareil selon la revendication 1, 2 ou 3, comprenant en outre un contrôleur de réfrigérant auxiliaire (10) configuré pour commander la direction d'écoulement d'un réfrigérant qui a passé l'échangeur de chaleur d'amenée d'eau chaude (4) de sorte que le réfrigérant qui a passé l'échangeur de chaleur d'amenée d'eau chaude (4) passe au travers de la voie d'écoulement d'évitement d'échangeur de chaleur (8) ou l'évite.

5. Appareil selon la revendication 4, dans lequel le contrôleur de réfrigérant auxiliaire (10) est configuré pour commander l'écoulement de réfrigérant de sorte qu'un réfrigérant s'écoule par la voie d'écoulement d'évitement d'échangeur de chaleur (8) au moment de l'opération d'amenée d'eau chaude.

6. Appareil selon la revendication 5, dans lequel si des conditions de dégivrage sont satisfaites pendant l'opération d'amenée d'eau chaude, le contrôleur de réfrigérant auxiliaire (10) est commandé de telle manière qu'un réfrigérant évite la voie d'écoulement d'évitement d'échangeur de chaleur (8) ; et le circuit de cycle de refroidissement (2) est commuté de l'opération de chauffage à l'opération de refroidissement.

7. Appareil selon la revendication 5, dans lequel le contrôleur de réfrigérant auxiliaire (10) est configuré pour commander l'écoulement de réfrigérant de telle manière qu'un réfrigérant évite la voie d'écoulement d'évitement d'échangeur de chaleur (8) lorsque l'amenée d'eau chaude et la climatisation sont en fonctionnement en même temps.

8. Appareil selon l'une quelconque des revendications 1 à 7, dans lequel l'appareil d'expansion (16, 17) comprend un appareil d'expansion intérieur (17) et un appareil d'expansion extérieur (16) ; et
une extrémité de la voie d'écoulement d'évitement d'échangeur de chaleur (8) est reliée à la voie d'écoulement d'amenée d'eau chaude (50) et l'autre extrémité de celle-ci est reliée entre l'appareil d'expansion intérieur (17) et l'appareil d'expansion extérieur (16).

9. Appareil selon la revendication 8, comprenant en outre une valve d'évitement d'échangeur de chaleur (88) qui est installée dans la voie d'écoulement d'évitement d'échangeur de chaleur (8) et configurée pour commander l'écoulement d'un réfrigérant.

10. Appareil selon la revendication 9, comprenant en outre une valve de réfrigérant liquide (90) qui est installée entre la voie d'écoulement d'évitement d'échangeur de chaleur (8) et l'appareil d'expansion intérieur (17) et configurée pour commander l'écoulement d'un réfrigérant.

11. Appareil selon l'une quelconque des revendications 1 à 10, dans lequel l'appareil d'expansion (16, 17) comprend un appareil d'expansion intérieur (17) et un appareil d'expansion extérieur (16) ;
l'appareil de chauffage de vitesse de type pompe à chaleur comprend en outre un séparateur gaz-liquide (100) installé entre l'appareil d'expansion intérieur (17) et l'appareil d'expansion extérieur (16) et
une conduite d'injection (102) qui injecte du réfrigérant vaporisé du séparateur gaz-liquide (100) au compresseur (12).

12. Appareil selon l'une quelconque des revendications 1 à 11, dans lequel le circuit de cycle de refroidissement comprend en outre une valve de commutation de refroidissement/chauffage (40) configurée pour commuter entre l'opération de refroidissement et l'opération de chauffage ;
la voie d'écoulement d'amenée d'eau chaude (50) comprend une voie d'écoulement d'afflux d'amenée d'eau chaude (52) menant le réfrigérant qui a été compressé dans le compresseur (12) à l'échangeur de chaleur d'amenée d'eau chaude (4) et une voie d'écoulement de sortie d'eau chaude (54) menant le réfrigérant qui s'est écoulé de l'échangeur de chaleur d'amenée d'eau chaude (4) à la valve de commutation de refroidissement/chauffage (40) ;
la voie d'écoulement d'afflux d'amenée d'eau chaude (52) et la voie d'écoulement de sortie d'amenée d'eau chaude (54) sont reliées respectivement au compresseur (12) et la valve de commutation de refroidissement/chauffage (40) ; et
la voie d'écoulement d'évitement d'échangeur de chaleur (8) est reliée à la voie d'écoulement de sortie d'amenée d'eau chaude (54).
